# EUROPEAN PATENT APPLICATION

(11) **EP 4 030 863 A1**
(43) Date of publication of application: **20.07.2022**
(21) Application number: 20862183.9
(22) Date of filing: 31.08.2020
(51) Int. Cl.: H04W 76/15, H04W 56/00, H04W 72/04, H04W 72/12

(54) **COMMUNICATION DEVICE AND COMMUNICATION METHOD**

(30) Priority: 13.09.2019 JP 2019167663
(71) Applicant: Sony Group Corporation, Tokyo 108-0075 (JP)
(72) Inventor: TANAKA Yusuke, Tokyo 108-0075 (JP); AIO Kosuke, Tokyo 108-0075 (JP)
(74) Representative: D Young & Co LLP
(86) International application number: PCT/JP2020/032880
(87) International publication number: WO 2021/049357

(57) **Abstract**

The present technology relates to a communication device and a communication method capable of transmitting the identical signals more appropriately.

A communication device includes a control unit configured to perform control such that a first signal related to setting of identical signals are transmitted and received between first other communication devices, and the identical signals are transmitted to a second other communication device based on the first signal, thereby allowing transmission of the identical signals more appropriately.. The present technology can be applied to, for example, a wireless LAN system.

## Description

### [Technical Field]

The present technology relates to a communication device and a communication method, and more particularly, to a communication device and a communication method capable of transmitting the identical signals more appropriately.

### [Background Art]

In recent years, as wireless devices have become widespread, the complexity of wireless communication networks and interference to communication caused due to the complexity have become problems. As a solution to this problem, an access point (AP) cooperation technology for operating a plurality of AP base stations in cooperation is necessary.

The AP cooperation technology is a scheme of transmitting signals to a single terminal (STA: station) by allowing a plurality of base stations to cooperate and allowing the terminal to receive and combine the signals. Due to the AP cooperation technology, an improvement in a throughput or expansion of a communication range by improving a signal-to-noise ratio can be expected in addition to achievement of communication in which interference with other terminals is inhibited.

On the other hand, schemes of exerting AP coordinated transmission diversity between a plurality of base stations have been disclosed (for example, see PTL 1). In the scheme disclosed in PTL 1, a single terminal (STA) can simultaneously receive signals by transmitting trigger frames in consideration of a propagation time difference.

### [Citation List]

### [Patent Literature]

[PTL 1]
JP2017-22459 A

### [Summary]

### [Technical Problem]

Incidentally, when an AP cooperation technology is used, signals transmitted by a plurality of base stations include part of information specific to each base station, and thus a finally generated signal differs for each base station. Therefore, there is a request for a technology for generating and transmitting identical signals to a single terminal between a plurality of base stations while including information specific to each base station.

In the scheme disclosed in PTL 1, a method of generating the identical signals is not disclosed. When an AP cooperation technology is used, it is difficult to implement a form for obtaining diversity.

The present technology has been devised in view of such circumstances and is capable of transmitting identical signals more appropriate

### [Solution to Problem]

A communication device according to an aspect of the present technology is a communication device including a control unit configured to perform control such that a first signal related to setting of identical signals is transmitted and received between first other communication devices, and the identical signals are transmitted to a second other communication device based on the first signal.

A communication method according to another aspect of the present technology is a communication method for a communication device performing control such that a first signal related to setting of identical signals is transmitted and received between first other communication devices, and the identical signals are transmitted to a second other communication device based on the first signal.

In a communication device and a communication method according to still another aspect of the present technology, a first signal related to setting of identical signals is transmitted and received between first other communication devices, and the identical signals are transmitted to a second other communication device based on the first signal.

A communication device according to still another aspect of the present technology is a communication device including a control unit configured to perform control such that a plurality of identical signals related to setting of the identical signals and transmitted from a plurality of other communication devices exchanging a first signal are received, and the plurality of identical signals are decoded as a single signal.

A communication method according to still another aspect of the present technology is a communication method for a communication device performing control such that a plurality of identical signals related to setting of the identical signals and transmitted from a plurality of other communication devices exchanging a first signal are received, and the plurality of identical signals are decoded as a single signal.

In a communication device and a communication method according to still another aspect of the present technology, a plurality of identical signals related to setting of the identical signals and transmitted from a plurality of other communication devices exchanging a first signal are received, and the plurality of identical signals are decoded as a single signal.

The communication device according to still another aspect of the present technology may be an independent device or may be an internal block in which one device is configured.

### [Brief Description of Drawings]

[Fig. 1]

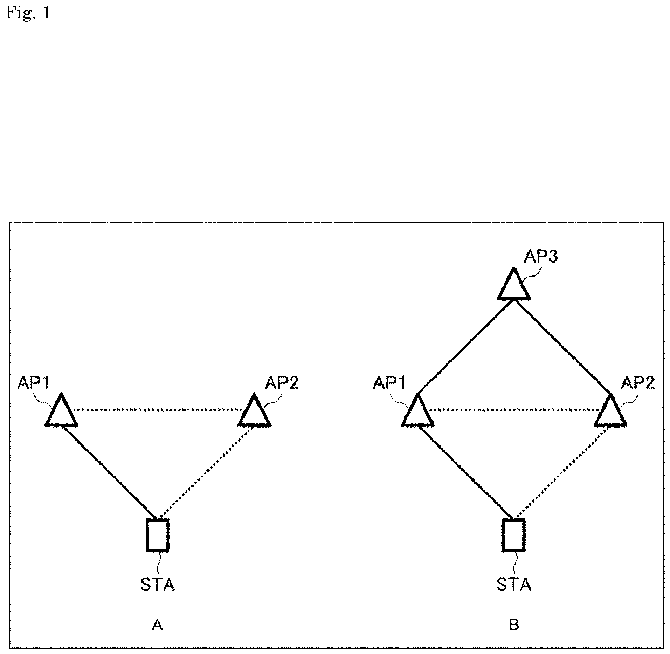

   Fig. 1 is a diagram illustrating an exemplary configuration of a wireless communication system to which the present technology is applied.
[Fig. 2]

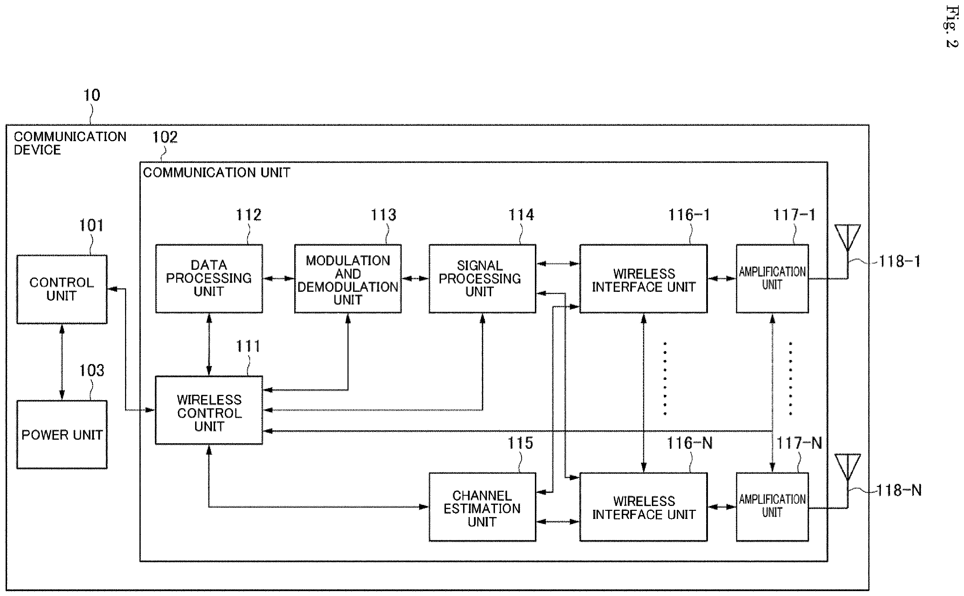

   Fig. 2 is a block diagram illustrating an exemplary configuration of a communication device according to an embodiment to which the present technology is applied.
[Fig. 3]

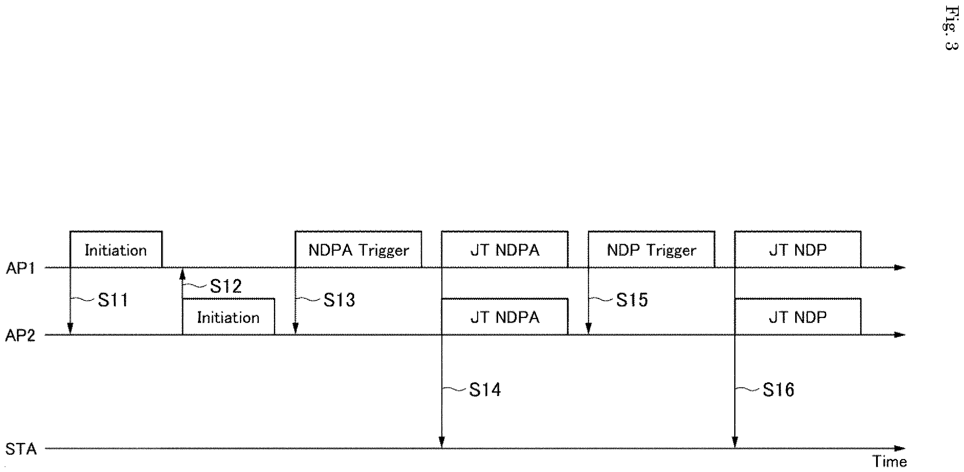

   Fig. 3 is a diagram illustrating a sequence when a channel information measurement signal is transmitted.
[Fig. 4]

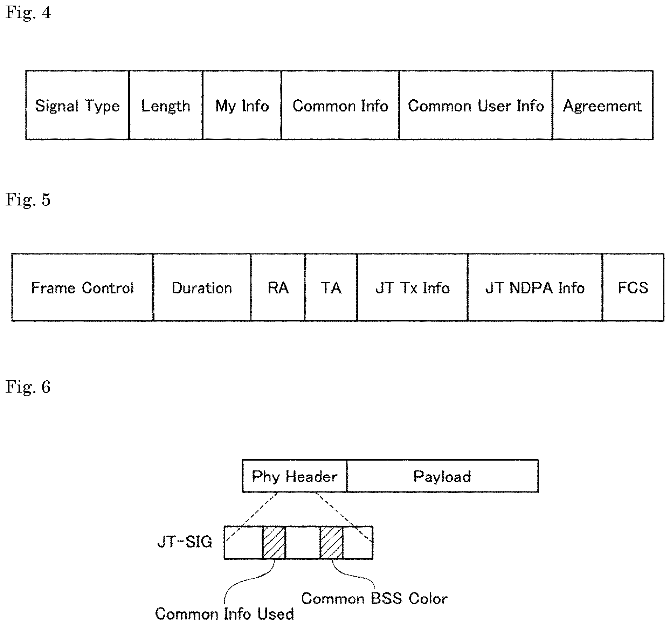

   Fig. 4 is a diagram illustrating an example of a frame format used by an Initiation signal.
[Fig. 5]
   Fig. 5 is a diagram illustrating an example of a frame format used by an NDPA Trigger signal.
[Fig. 6]
   Fig. 6 is a diagram illustrating an example of a physical format used by a JT NDPA signal.
[Fig. 7]

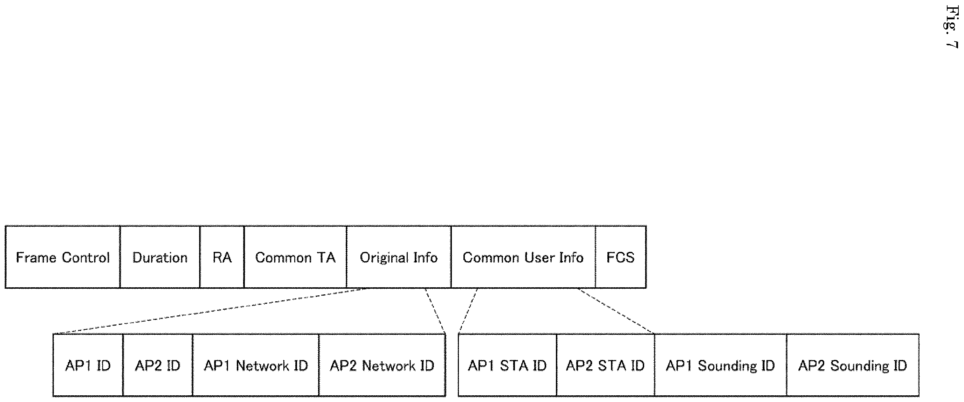

   Fig. 7 is a diagram illustrating a detailed example of a frame format used by a JT NDPA signal.
[Fig. 8]

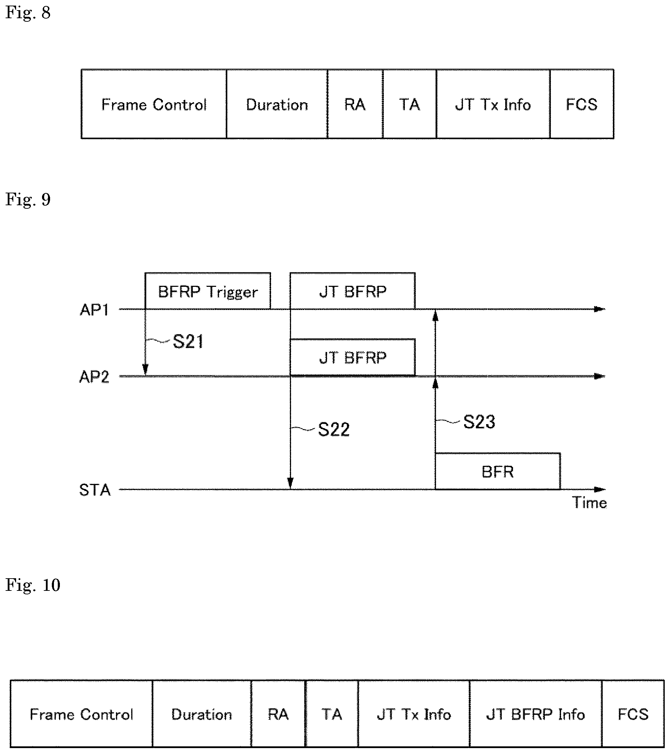

   Fig. 8 is a diagram illustrating an example of a frame format used for an NDP Trigger signal.
[Fig. 9]
   Fig. 9 is a diagram illustrating a sequence when a channel information measurement result request signal is transmitted.
[Fig. 10]
   Fig. 10 is a diagram illustrating an example of a frame format used by a BFRP Trigger signal.
[Fig. 11]

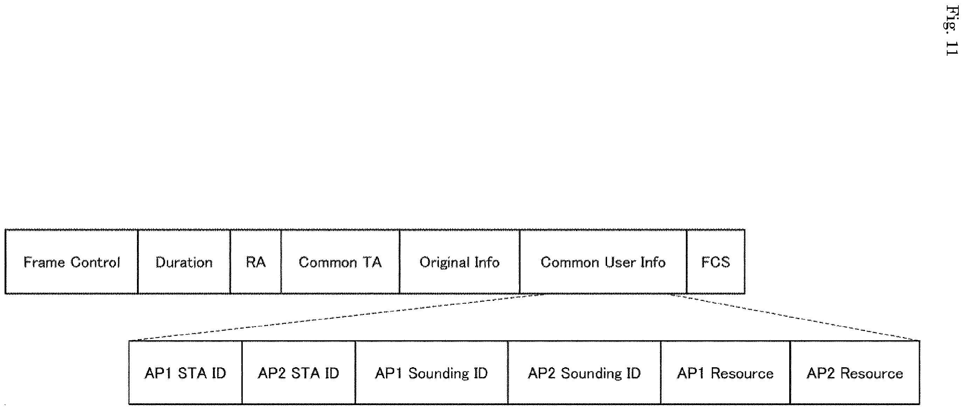

   Fig. 11 is a diagram illustrating an example of a frame format used by a JT BFRP signal.
[Fig. 12]

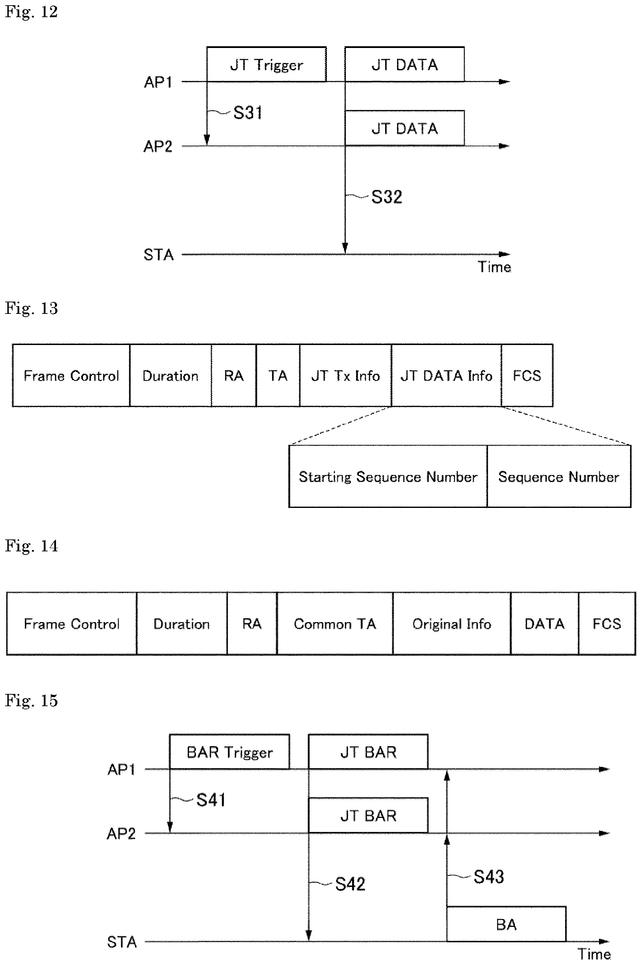

   Fig. 12 is a diagram illustrating a sequence when a data signal is transmitted.
[Fig. 13]
   Fig. 13 is a diagram illustrating an example of a frame format used by a JT Trigger signal.
[Fig. 14]
   Fig. 14 is a diagram illustrating an example of a frame format used by a JT DATA signal.
[Fig. 15]
   Fig. 15 is a diagram illustrating a sequence when a data reception result request signal is transmitted.
[Fig. 16]

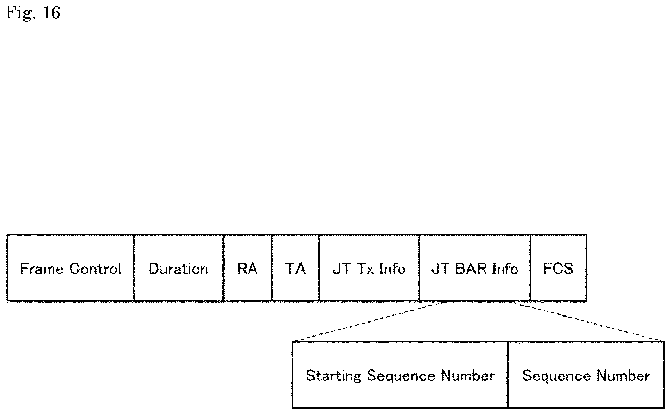

   Fig. 16 is a diagram illustrating an example of a frame format used by a BAR Trigger signal.
[Fig. 17]

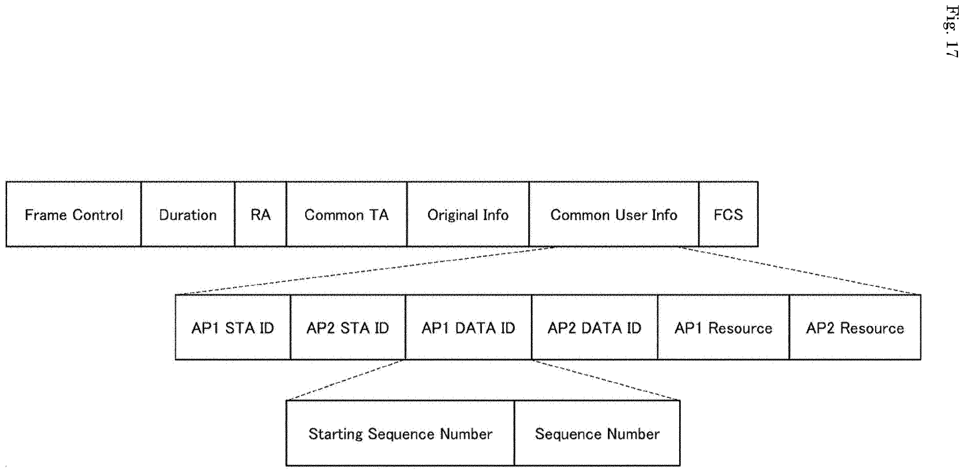

   Fig. 17 is a diagram illustrating an example of a frame format used by a JT BAR signal.
[Fig. 18]

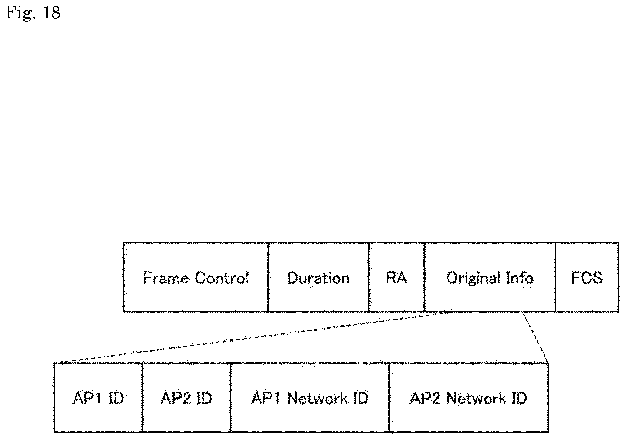

   Fig. 18 is a diagram illustrating an example of a frame format used by an independent signal storing Original Info.
[Fig. 19]

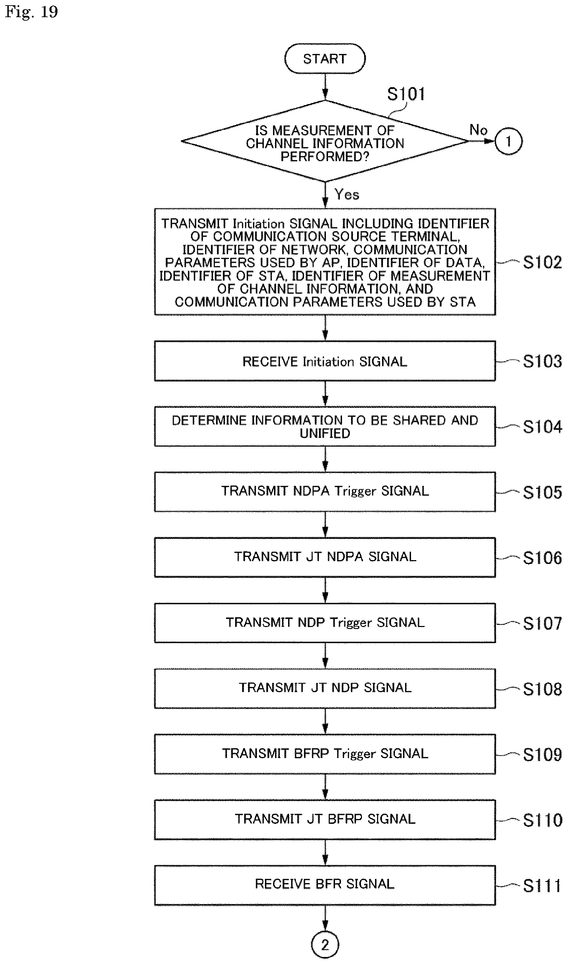

   Fig. 19 is a flowchart illustrating a flow of an operation of a base station AP1.
[Fig. 20]

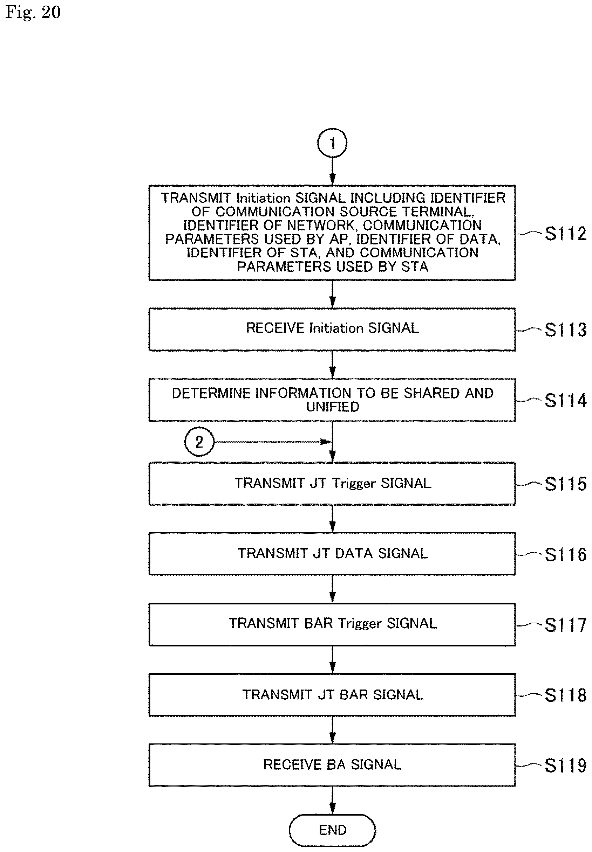

   Fig. 20 is a flowchart illustrating a flow of an operation of the base station AP1.
[Fig. 21]

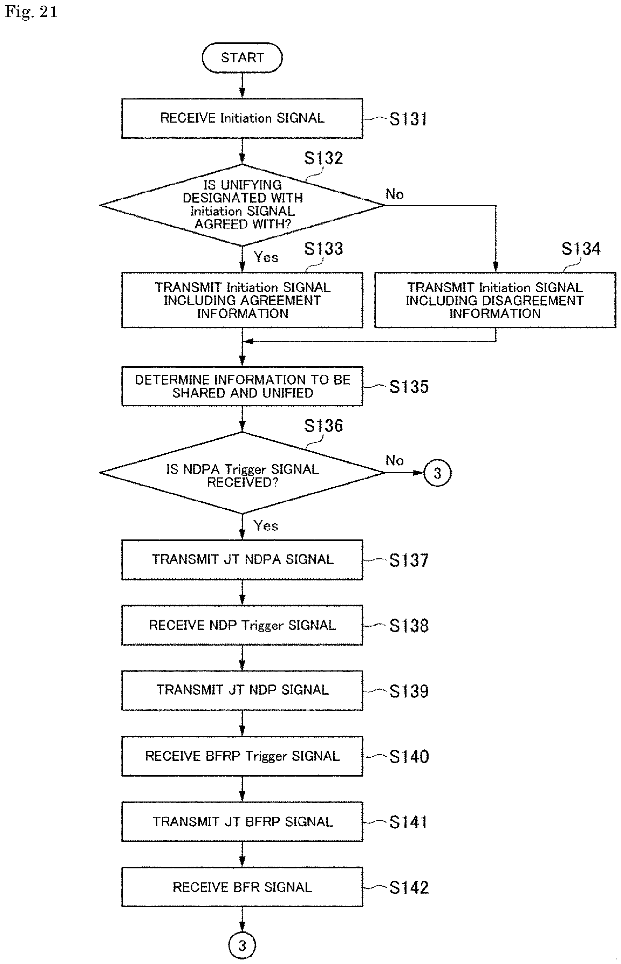

   Fig. 21 is a flowchart illustrating a flow of an operation of a base station AP2.
[Fig. 22]

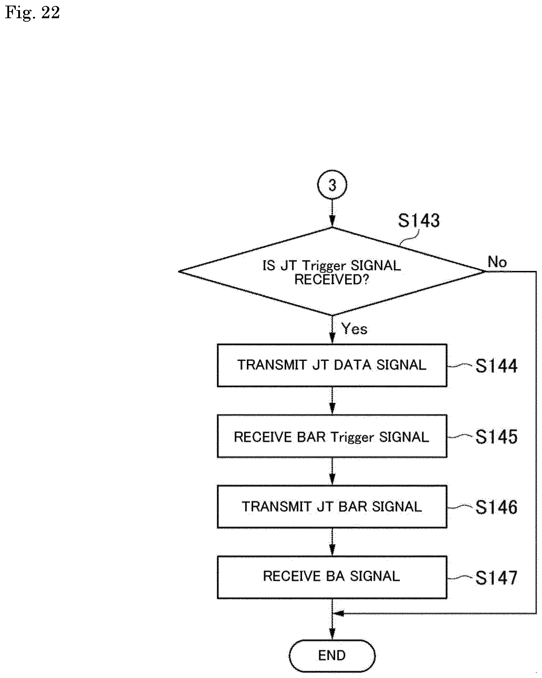

   Fig. 22 is a flowchart illustrating a flow of an operation of the base station AP2.
[Fig. 23]

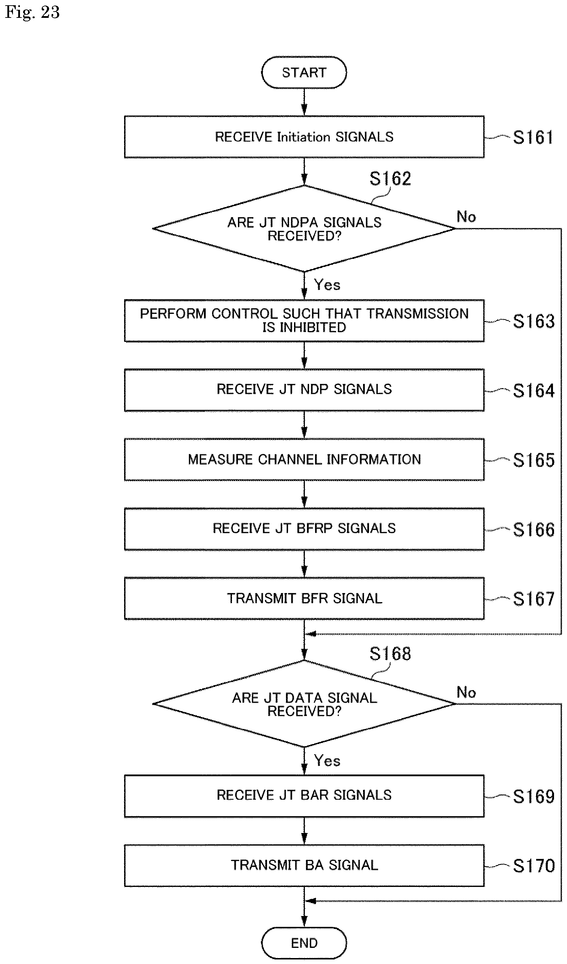

   Fig. 23 is a flowchart illustrating a flow of an operation of a terminal STA.
[Fig. 24]

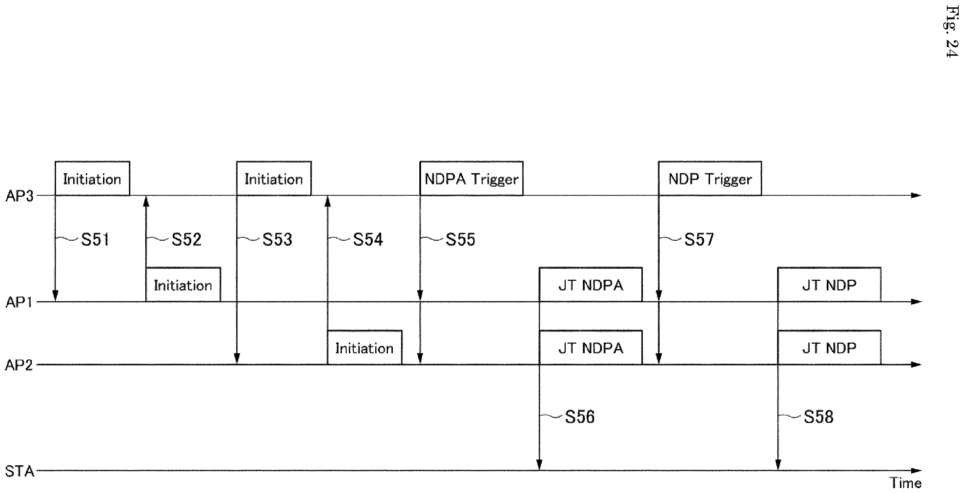

   Fig. 24 is a diagram illustrating a sequence when a channel information measurement signal in a constraint configuration is transmitted.
[Fig. 25]

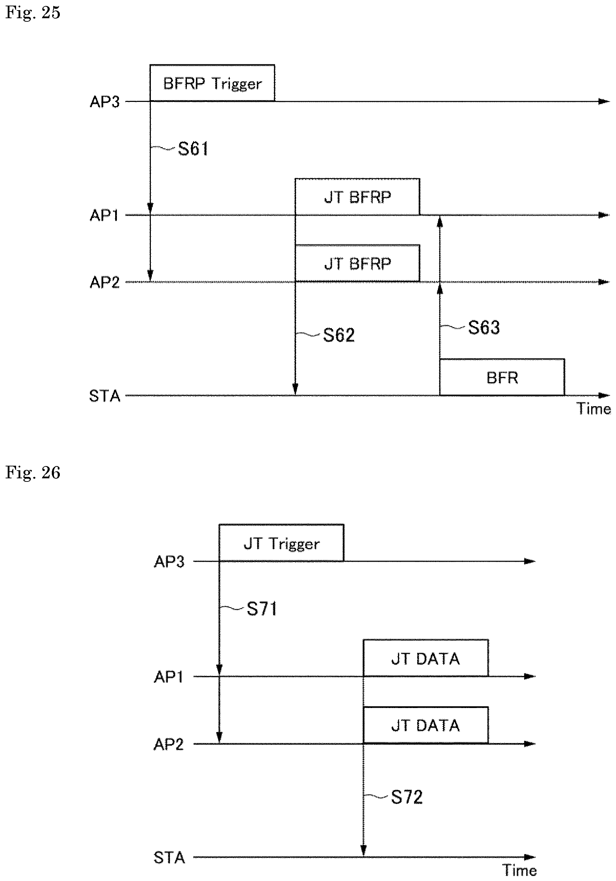

   Fig. 25 is a diagram illustrating a sequence in a transmission period of a channel information measurement result request signal in the constraint configuration.
[Fig. 26]
   Fig. 26 is a diagram illustrating a sequence in a transmission period of a data signal in the constraint configuration.
[Fig. 27]

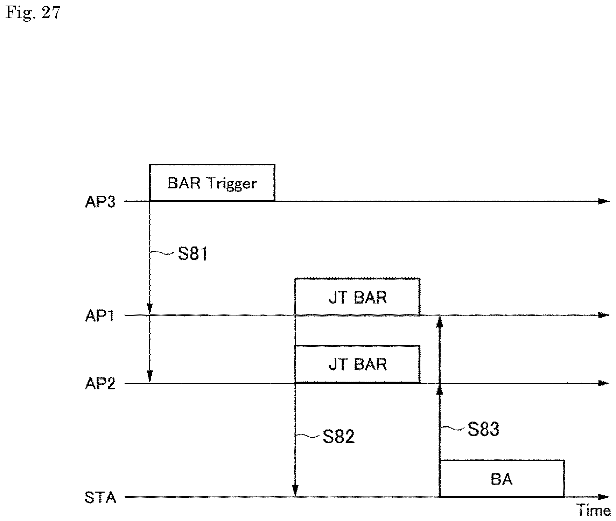

   Fig. 27 is a diagram illustrating a sequence when a data reception result request signal in the constraint configuration is transmitted.

### [Description of Embodiments]

Hereinafter, embodiments of the present technology will be described with reference to the drawings. The description will be made in the following order.
1. Embodiments of present technology
2. Modified example

### <1. Embodiments of present technology>

### (Exemplary configuration of wireless communication system)

Fig. 1 is a diagram illustrating an exemplary configuration of a wireless communication system to which the present technology is applied.

The wireless communication system in Fig. 1 is a wireless local area network (LAN) system that includes a plurality of networks (BSS: basic service set) formed by a base station (AP: access point) and a subordinate terminal (STA: station) connected to the base stations.

In A of Fig. 1, a wireless communication system includes a terminal STA connected to at least one base station AP between base stations AP1 and AP2. This configuration is called a non-constraint configuration.

In B of Fig. 1, a wireless communication system includes a base station AP3 connected to both the base stations AP1 and AP2. This configuration is called a constraint configuration.

That is, in the non-constraint configuration and the constraint configuration, the terminal STA has a positional relation in which the base stations AP1 and AP2 can communicate with each other, and the base stations AP1 and AP2 have a positional relation in which they can communicate with each other. Here, in the constraint configuration, the base stations AP1 and AP2 are connected to the base station AP3 that supervises the plurality of base stations AP.

### (Exemplary configuration of communication device)

Fig. 2 illustrates an exemplary configuration of a communication device (wireless communication device) according to an embodiment to which the present technology is applied.

A communication device 10 illustrated in Fig. 2 is configured as a base station AP or a subordinate terminal STAin the wireless communication system in Fig. 1.

In Fig. 2, the communication device 10 includes a control unit 101, a communication unit 102, and a power unit 103. The communication unit 102 includes a wireless control unit 111, a data processing unit 112, a modulation and demodulation unit 113, a signal processing unit 114, a channel estimation unit 115, wireless interface units 116-1 to 116-N (where N is an integer equal to or greater than 1), and amplification units 117-1 to 117-N (where N is an integer equal to or greater than 1).

Further, in the communication device 10, antennas 118-1 to 118-N (where N is an integer equal to or greater than 1) are provided in the communication unit 102 (the amplification units 117-1 to 117-N of the communication unit 102).

The control unit 101 and the wireless control unit 111 are configured as, for example, a control device such as a processor such as a central processing unit (CPU) or a microprocessor and control an operation of each unit. The control unit 101 and the communication unit 102 may be configured as one block, that is, for example, one large scale integration (LSI).

The control unit 101 and the wireless control unit 111 transmit and receive information (data) between blocks. The communication unit 102 performs processing related to wireless communication under the control of the control unit 101 and the wireless control unit 111.

That is, the control unit 101 and the wireless control unit 111 perform scheduling of packets in the data processing unit 112 and setting of parameters in the modulation and demodulation unit 113 and the signal processing unit 114 of the communication unit 102. The control unit 101 and the wireless control unit 111 perform transmission power control and setting of parameters of the wireless interface units 116-1 to 116-N and the amplification units 117-1 to 117-N.

In particular, in the communication device 10 (the base station AP), at least one control unit between the control unit 101 and the wireless control unit 111 perform sequence control for sharing and unifying of information by exchanging a signal (an Initiation signal or a Trigger signal to be described below) related to setting of identical signals (a JT NDPA signal, a JT NDP signal, a JT BFRP signal, a JT DATA signal, and a JT BAR signal to be described below) with the first other communication device 10 (other base station AP).

At least one of the control unit 101 and the wireless control unit 111 controls an operation of each unit such that the identical signals (the JT NDPA signal, the JT NDP signal, the JT BFRP signal, the JT DATA signal, and the JT BAR signal to be described below) are transmitted to the second other communication device 10 (the terminal STA) using a signal format for storing the shared and unified information based on the exchanged signal (the Initiation signal or the like to be described below).

On the other hand, in the second other communication device 10 (the terminal STA), at least one control unit between the control unit 101 and the wireless control unit 111 receives the plurality of identical signals transmitted from the plurality of other communication devices (the plurality of base stations AP) exchanging the signal (the Initiation signal or the like to be described below) related to the setting of the identical signals and controls an operation of each unit such that the plurality of identical signals (the JT NDPA signal, the JT NDP signal, the JT BFRP signal, the JT DATA signal, and the JT BAR signal to be described below) are decoded as a single signal.

In a transmission period in which data is input from a higher protocol layer, the data processing unit 112 generates packets for wireless communication from the input data, performs processing such as addition of a header, for media access control (MAC) or addition of an error detection code, and outputs processed data obtained as a result to the modulation and demodulation unit 113.

In a reception period in which data is input from the modulation and demodulation unit 113, the data processing unit 112 performs processing such as analysis of a MAC header, detection of a packet error, or reorder processing on the input data and outputs processed data obtained as a result to a higher protocol layer.

In the transmission period, the modulation and demodulation unit 113 performs processing such as encoding, interleaving, and modulation on the input data input from the data processing unit 112 based on a coding and modulation scheme set by the control unit 101 or the like and outputs a data symbol stream obtained as a result to the signal processing unit 114.

In the reception period, the modulation and demodulation unit 113 performs processing opposite to the processing in the transmission period, that is, processing such as demodulation, deinterleaving, and decoding, on the data symbol stream input from the signal processing unit 114, based on a coding and demodulation scheme set by the control unit 101 or the like and outputs processed data obtained as a result to the wireless control unit 111 or the data processing unit 112.

In the transmission period, the signal processing unit 114 performs processing such as signal processing supplied for space separation on the data symbol stream input from the modulation and demodulation unit 113, as necessary, and outputs one or more transmission symbol stream obtained as a result to each of the wireless interface units 116-1 to 116-N.

In the reception period, the signal processing unit 114 performs processing such as signal processing for space separation of a stream on the received symbol stream input from each of the wireless interface units 116-1 to 116-N as necessary and outputs a data symbol stream obtained as a result to the modulation and demodulation unit 113.

The channel estimation unit 115 calculates a complex channel gain information of a propagation path from a preamble portion and a training signal portion of the signal input from each of the wireless interface units 116-1 to 116-N. The complex channel gain information calculated by the channel estimation unit 115 is used for demodulation processing in the modulation and demodulation unit 113 and space processing in the signal processing unit 114 via the wireless control unit 111.

In the transmission period, the wireless interface unit 116-1 converts the transmission symbol stream input from the signal processing unit 114 into an analog signal, performs processing such as filtering and upconverting to a carrier frequency, and outputs (sends) a transmission signal obtained as a result to the amplification unit 117-1 or the antenna 118-1.

In the reception period, the wireless interface unit 116-1 performs processing opposite to the processing in the transmission period, that is, processing such as downconverting, on the received signal input from the amplification unit 117-1 or the antenna 118-1 and outputs a received symbol stream obtained as a result to the signal processing unit 114.

In the transmission period, the amplification unit 117-1 amplifies a transmission signal (analog signal) input from the wireless interface unit 116-1 up to predetermined power and sends the amplified transmission signal to the antenna 118-1. In the reception period, the amplification unit 117-1 amplifies the received signal (analog signal) input from the antenna 118-1 up to predetermined power and outputs the amplified received signal to the wireless interface unit 116-1.

The wireless interface units 116-2 to 116-N are configured similarly to the wireless interface unit 116-1, the amplification units 117-2 to 117-N are configured similarly to the amplification unit 117-1, and the antennas 118-2 to 118-N are configured similarly to the antenna 118-1. Therefore, description thereof will be omitted here.

For the amplification units 117 (117-1 to 117-N), at least one function (at least part) between the function in the transmission period and the function in the reception period may be embedded in the wireless interface units 116 (116-1 to 116-N). For the amplification units 117 (117-1 to 117-N), at least one function (at least part) between the function in the transmission period and the function in the reception period may be configured as an external constituent element of the communication unit 102.

Further, respective elements of the wireless interface units 116-1 to 116-N, the amplification units 117-1 to 117-N, and the antennas 118-1 to 118-N may be configured as one set (for example, one or more of the wireless interface units 116, one or more of the amplification units 117, and one or more of the antennas 118 are configured as one set), and one or more sets may be included as constituent elements.

The power unit 103 is configured as a battery power or a fixed power supply and supplies power to each unit of the communication device 10.

The communication device 10 is configured as follows.

Hereinafter, details of the wireless communication system to which the present technology is applied will be described with reference to the drawings.

Specifically, operations in four cases in (1) a transmission period of a channel information measurement signal, (2) a transmission period of a channel information measurement result request signal, (3) a transmission period of a data signal, and (4) a transmission period of a data reception result request signal when the wireless communication system to which the present technology is applied has a non-constraint configuration will be described. Operations in the constraint configuration will be described as differences from operations in the non-constraint configuration.

### (1) Transmission period of channel information measurement signal

### (Sequence diagram)

Fig. 3 is a diagram illustrating a sequence when a channel information measurement signal is transmitted.

In the sequence of Fig. 3, an operation of the terminal (STA) connected to at least one base station between the plurality of base stations (AP1 and AP2) is shown.

In the following description of the non-constraint configuration, a case in which the sequence starts under the assumption that the base station AP1 and the terminal STA are connected and the base station AP1 serves as a starting point will be described. In the diagrams of the sequences of Fig. 3 and the like, a time progresses from the left to the right of the drawing.

The base station AP1 transmits an Initiation signal to the base station AP2 (S11). The base station AP2 transmits the Initiation signal to the base station AP1 as a response to the Initiation signal (S12).

The Initiation signal includes information regarding a transmission source terminal (the base station AP of a transmission source) of the Initiation signal, common information used by the plurality of base stations AP, and information regarding the terminal STA which is a destination of the plurality of base stations AP.

By transmitting and receiving the Initiation signal, the base stations AP1 and AP2 perform sharing and unifying of information. The sharing and the unifying of the information may be performed after the transmission and reception of the Initiation signal are performed a plurality of times.

The base station AP1 performing the sharing and the unifying of the plurality of pieces of information may notify the terminal STA of at least part of information indicating that the sharing and the unifying are performed and the information subject to the sharing and the unifying. The base stations AP1 and AP2 and the terminal STA may check whether they are able to handle the sequence before the sequence starts or by transmitting and receiving the Initiation signal.

The base station AP1 performing the sharing and the unifying of the information transmits a null data packet announcement (NDPA) Trigger signal to the base station AP2 by transmitting and receiving the Initiation signal (S13). The null data packet announcement (NDPA) Trigger signal can also be called a null data packet announcement (NDPA) Slave Trigger signal or a null data packet announcement (NDPA) variant of Slave Trigger signal.

The NDPA Trigger signal is a signal inducing transmission of a report signal to the base station AP2 at the identical timing to that for the base station AP1. The report signal is a signal for reporting transmission of a measurement signal for measuring channel information.

The report signal and the measurement signal will be described below. The NDPA Trigger signal includes information regarding a communication parameter used between the plurality of base stations AP and information regarding the JT NDPA signal for simultaneous transmission of the plurality of base stations AP.

The base station AP1 transmitting the NDPA Trigger signal and the base station AP2 receiving the NDPA Trigger signal transmit a joint transmission null data packet announcement (JT NDPA) signal which is a report signal toward the terminal STA (S14).

The JT NDPA signal is generated based on information subjected to the sharing and the unifying and is transmitted using an identical timing, frequency, or modulation coding scheme, or other communication parameters based on the information shared and unified or included in an NDPA Trigger.

The JT NDPA signal includes information regarding an identifier of a transmission source terminal used between the plurality of base stations AP, an identifier related to measurement of channel information performed between the plurality of base stations AP and the terminal STA, and an identifier of the terminal STA which is a destination of the plurality of base stations AP.

The terminal STA receiving the JT NDPA signal receives and decodes the JT NDPA signals transmitted from the base stations AP1 and AP2 as a single signal. The terminal STA may receive and decode at least parts (for example, physical headers) of the JT NDPA signals as a single signal. The terminal STA and other communication terminals (not illustrated) receiving the JT NDPA signals operate so that transmission is inhibited during an interval of a period designated with the JT NDPA signal.

The base station AP1 transmitting the JT NDPA signal transmits a null data packet (NDP) Trigger signal to the base station AP2 (S15).

The NDP Trigger signal is a signal inducing transmission of a measurement signal to the base station AP2 at an identical timing to the base station AP1. The NDP Trigger signal includes information regarding a communication parameter use between the plurality of base stations AP.

The base station AP1 transmitting the NDP Trigger signal and the base station AP2 receiving the NDP Trigger signal transmit a joint transmission null data packet (JT NDP) signal which is a measurement signal toward the terminal STA (S16).

The JT NDP signal is generated based on information subjected to the sharing and the unifying and is transmitted using an identical timing, frequency, or modulation coding method, or other communication parameters based on the information shared and unified or included in an NDP Trigger.

The terminal STA receiving the JT NDP signal receives and decodes the JT NDP signals transmitted from the base stations AP1 and AP2 as a single signal. The terminal STA may receive and decode at least parts (for example, physical headers) of the JT NDP signals as a single signal.

According to the foregoing sequence, the information can be shared and unified between the base stations AP1 and AP2. The identical signal can be generated and transmitted between the base stations AP1 and AP2.

The base stations AP1 and AP2 can each transmit a report signal for reporting transmission of a measurement signal at the identical timing. The terminal STA can receive the report signals transmitted at the identical timing by the base stations AP1 and AP2 as a single signal.

Further, the base stations AP1 and AP2 can each transmit the measurement signal at the identical timing. The terminal STA can receive the measurement signals transmitted at the identical timing by the base stations AP1 and AP2 as a single signal.

The plurality of base stations AP can simultaneously transmit the signal for simultaneously measuring the channel information, and thus it is possible to reduce overheads. Due to the reduction in the overheads, it is possible to achieve an improvement in the throughput of the whole system and a reduction in a delay time.

Further, the terminal STA can combine the plurality of signals and obtain a combined gain. Thus, it is possible to expand a communication range. Thus, it is possible to improve communication reliability.

### (Format of Initiation signal)

Fig. 4 illustrates an example of a frame format used by an Initiation signal in a sequence of the channel information measurement signal in the transmission period.

Signal Type includes information indicating that this frame is an Initiation signal. Length includes information regarding the length of this frame.

My Info includes information regarding a transmission source terminal (the base station AP of the transmission source) of the Initiation signal. The information regarding the transmission source terminal may include an identifier of the transmission source terminal. For example, the identifier of the transmission source terminal may be a MAC address or may be an address used for communication at a certain frequency by the transmission source terminal.

The information regarding the transmission source terminal may include an identifier of a network configured by the transmission source terminal. For example, the identifier of the network configured by the transmission source terminal may be a service set identifier (SSID) defined in IEEE 802.11, may be a basic service set identifier (BSSID), or may be a basic service set color (BSS Color).

Common Info includes common information used by the plurality of base station AP. The common information may include an identifier of the transmission source terminal (the base station AP of the transmission source) used between the plurality of base stations AP.

For example, the identifier of the transmission source terminal used between the plurality of base stations AP may be a MAC address, may be an address used for communication at a certain frequency by the transmission source terminal, or may be information indicating that an address determined in advance is used. The identifier of the transmission source terminal may be an identifier of the transmission source terminal itself of the Initiation signal.

The information used between the plurality of base stations AP may include an identifier of a network configured by the transmission source terminal used between the plurality of base stations AP.

For example, the identifier of the network configured by the transmission source terminal used between the plurality of base stations AP may be an SSID defined in IEEE 802.11, may be a BSSID, or may be a BSS Color, or may be information indicating that the SSID, the BSSID, or the BSS Color determined in advance is used. The identifier of the network configured by the transmission source terminal may be an identifier of a network configured by the transmission source terminal itself of the Initiation signal.

The common information may include information regarding communication parameters used between the plurality of base stations AP. The information regarding the communication parameters may be information regarding a central frequency, a frequency bandwidth, a modulation coding scheme, a space stream, and the length of a signal.

Common User Info includes information regarding the terminal STA which is a destination of the plurality of base stations AP. The information regarding the terminal STA which is a destination may include identifier information of the terminal STA.

For example, the identifier of the terminal STA may be an identifier of the terminal STA to which a base station AP1 is allocated or an Association ID (AID) defined in IEEE 802.11, or may be information indicating that an identifier determined in advance is being used.

The information regarding the terminal STA which is a destination may include an identifier regarding measurement of channel information performed between the plurality of base stations AP and the terminal STA.

For example, the identifier regarding measurement of the channel information may be Sounding Dialog Token Number defined in IEEE 802.11. The information regarding the terminal STA which is a destination may include information regarding communication parameters used to transmit a result of the measurement of the channel information by the terminal STA. The communication parameters may be information regarding a central frequency, a frequency bandwidth, a modulation coding scheme, a space stream, and the length of a signal.

Agreement may include information regarding necessity to use uniform information based on information included in the received Initiation signal.

The information regarding necessity includes information indicating agreement (agreement information) in agreement of designated unification, and includes information indicating non-agreement (non-agreement information) in non-agreement of the designated unification.

The information regarding necessity may be transmitted by the base station AP receiving the Initiation signal from another base station AP, for example, only the base station AP2. At this time, an Initiation signal which does not include all or at least parts of My Info, Common Info, and Common User Info may be transmitted.

When the base station AP1 notifies the terminal STA of information subjected to the sharing and the unifying, an Initiation signal which does not include all or at least part of My Info and Agreement may be transmitted.

### (Format of NDPA Trigger signal)

Fig. 5 illustrates an example of a frame format used by an NDPA Trigger signal in a sequence of the channel information measurement signal in the transmission period.

Frame Control includes information regarding setting of the NDPA Trigger signal. Duration includes information regarding the length of this frame.

RA includes information regarding an address of the destination base station AP of the NDPA Trigger signal. TA includes information regarding an address of the transmission source base station AP of the NDPA Trigger signal.

JT TX Info includes information regarding communication parameters used between the plurality of base stations AP. The information regarding the communication parameters may be information regarding a central frequency, a frequency bandwidth, a modulation coding scheme, a space stream, and the length of a signal.

The information regarding the communication parameters may be information for synchronizing frequencies and phases of the plurality of base stations AP or information for interpolation. The information regarding the communication parameters may be information regarding a timing at which the plurality of base stations AP perform simultaneous transmission.

JT NDPA Info includes information regarding the JT NDPA signal simultaneously transmitted by the plurality of base stations AP.

For example, the information regarding the JT NDPA signal may be information regarding setting of the JT NDPA signal or may be information regarding setting of Frame Control defined in IEEE 802.11. The information regarding the JT NDPA signal may be information in which the JT NDPA signal to be described below is stored.

FCS includes information regarding error correction.

### (Format of JT NDPA signal)

Fig. 6 illustrates an example of a physical format used by the JT NDPA signal in a sequence of the channel information measurement signal in the transmission period.

This format is configured by Phy Header and Payload subsequent to Phy Header. Phy Header includes JT-SIG. JT-SIG can also be called as EHT-SIG.

Since CRC is added to the tail of Phy Header, another communication terminal (not illustrated) can receive information regarding JT-SIG with only Phy Header without receiving the whole JT NDPA signal. Thus, the other communication terminal can perform an operation based on the information regarding JT-SIG.

JT-SIG may include Common Info Used which is information indicating that the shared and unified information is included. JT-SIG may include Common BSS Color which is an identifier of a network unified by transmitting and receiving the Initiation signal.

The identifier of the network may be BSS Color defined in IEEE 802.11. Thus, the other communication terminal can stop the reception and perform transmission power control, control of a detection threshold, or a space reusing operation or the like based on Common BSS Color.

In Payload, a frame format illustrated as a detailed example in Fig. 7 is stored. A region including at least a part of the information included in Phy Header may be included in a middle portion or the tail of Payload.

Fig. 7 illustrates a detailed example of a frame format used by the JT NDPA signal in a sequence of the channel information measurement signal in the transmission period.

Frame Control includes information regarding setting of the JT NDPA signal. The information of the setting may be determined based on the information included in JT NDPA Info of the NDPA Trigger signal.

Duration includes information regarding the length of this frame. RA includes information regarding an address of the terminal STA which is a destination of this frame.

Common TA includes an identifier of a transmission source terminal used between the plurality of base stations AP. The identifier of the transmission source terminal used between the plurality of base station AP may be determined based on the information included in Common Info of the Initiation signal.

Original Info includes information regarding each base station AP before the unifying. For example, the information regarding each base station AP before the unifying may be an identifier (AP1 ID or AP2 ID) of each base station AP. The information regarding each base station AP before the unifying may be an identifier (AP1 network ID or AP2 network ID) of a network configured by the base stations AP.

For the information regarding each base station AP before the unifying, the identifiers of the plurality of base stations AP or the identifiers of networks configured by the plurality of base stations AP may be enumerated. The information regarding each base station AP before the unifying may be enumerated in an ascending order or the information regarding the base station AP1 transmitting the NDPA Trigger signal may first be stated.

Common User Info includes an identifier (AP1 STA ID or AP2 STAID) of the terminal STA which is a destination of the plurality of base stations AP. The identifiers of the terminal STA may be determined based on the information included in Common User Info of the Initiation signal.

Common User Info includes an identifier (AP1 Sounding ID or AP2 Sounding ID) regarding measurement of channel information performed between the plurality of base stations AP and the terminal STA. The identifier regarding the measurement of the channel information may be determined based on the information included in Common User Info of the Initiation signal.

Common User Info may be repeated by the number of base stations AP transmitting the JT NDPA signal. When Common User Info is returned, Common User Info corresponding to the base stations AP may be enumerated in a sequence corresponding to a sequence of the identifiers of the base stations AP enumerated in Original Info.

FCS includes information regarding error correction.

### (Format of NDP Trigger signal)

Fig. 8 illustrates an example of a frame format used for an NDP Trigger signal in a sequence of the channel information measurement signal in the transmission period.

In Fig. 8, description of Frame Control, Duration, RA, TA, JT TX Info, and FCS in the NDP Trigger signal is the same as the description of the NDPA Trigger signal in Fig. 5, and thus description thereof will be omitted.

### (Format of JT NDP signal)

In a sequence in a transmission period of the channel information measurement signal, the JT NDP signal can use the physical format used by the JT NDPA signal in Fig. 6. The JT NDP signal may be a signal in which none is included in Payload when the physical format in Fig. 6 is used.

### (2) Transmission period of channel information measurement result request signal

### (Sequence diagram)

Fig. 9 is a diagram illustrating a sequence when a channel information measurement result request signal is transmitted.

In the diagram of the sequence in Fig. 9, the base stations AP1 and AP2 perform sharing and unifying of information by transmitting and receiving the Initiation signal before the sequence. Information for sharing and unifying the Initiation signal is the same as the information described in the diagram of the sequence (S11 and S12) described above in Fig. 3.

The base station AP1 transmits a beam forming report poll (BFRP) Trigger signal to the base station AP2 (S21). The beam forming report poll (BFRP) Trigger signal can also be called a beam forming report poll (BFRP) Slave Trigger signal or a beam forming report poll (BFRP) variant of Slave Trigger signal.

The BFRP Trigger signal is a signal inducing transmission of a joint transmission beam forming report poll (JT BFRP) signal which is a measurement result request signal to the base station AP2 at an identical timing to the base station AP1. The JT BFRP signal will be described below.

The BFRP Trigger signal includes information regarding communication parameters used between the plurality of base stations AP and information regarding the JT BFRP signal simultaneously transmitted by the plurality of base stations AP.

The base station AP1 transmitting the BFRP Trigger signal and the base station AP2 receiving the BFRP Trigger signal transmit the JT BFRP signal toward the terminal STA (S22).

The JT BFRP signal is generated based on the information subjected to the sharing and the unifying and is transmitted using an identical timing, frequency, or modulation coding method, or other communication parameters based on the information shared and unified or included in an BFRP Trigger.

The JT BFRP signal includes information regarding an identifier of a transmission source terminal (the base station AP which is a transmission source) used between the plurality of base stations AP, an identifier regarding measurement of the channel information performed between the plurality of base stations AP and the terminal STA, and the identifier of the terminal STA which is a destination of the plurality of base stations AP.

The terminal STA receiving the JT BFRP signal receives and decodes the JT BFRP signals transmitted from the base stations AP1 and AP2 as a single signal. The terminal STA may receive and decode at least parts (for example, physical headers) of the JT BFRP signals as a single signal.

The terminal STA acquires the base stations AP1 and AP2 which are transmission sources and identifiers regarding measurement of the channel information of the base stations AP1 and AP2 from the information included in the JT BFRP signal, and transmits a measurement result of the designated channel information as a beam forming report (BFR) signal to the base stations AP1 and AP2 (S23).

According to the foregoing sequence, the base stations AP1 and AP2 can each transmit a measurement result request signal at an identical timing.

The terminal STA can receive the measurement result request signals transmitted at the identical timing by the base stations AP1 and AP2 as a single signal. The terminal STA can transmit the measurement result to the base stations AP1 and AP2 while receiving the measurement result request signals as a single signal.

The plurality of base stations AP can simultaneously transmit the measurement result request signal, and thus it is possible to reduce overheads. Due to the reduction in the overheads, it is possible to achieve an improvement in the throughput of the whole system and a reduction in a delay time.

Further, the terminal STA can combine the plurality of signals and obtain a combined gain. Thus, it is possible to expand a communication range. Thus, it is possible to improve communication reliability.

### (Format of BFRP Trigger signal)

Fig. 10 is a diagram illustrating an example of a frame format used by the BFRP Trigger signal in the sequence in the transmission period of the channel information measurement result request signal.

In Fig. 10, description of Frame Control, Duration, RA, TA, and JT TX Info in the BFRP Trigger signal is the same as the description of the NDPA Trigger signal in Fig. 5, and thus description thereof will be omitted.

JT BFRP Info includes information regarding the JT BFRP signal simultaneously transmitted by the plurality of base stations AP.

The information regarding the JT BFRP signal may be information regarding setting of the JT BFRP signal or may be information regarding setting of Frame Control defined in IEEE 802.11. The information regarding the JT BFRP signal may be information in which the JT BFRP signal to be described below is stored.

FCS includes information regarding error correction.

### (Format of JT BFRP signal)

Fig. 11 is a diagram illustrating an example of a frame format used by a JT BFRP signal in the sequence in the transmission period of the channel information measurement result request signal.

Frame Control includes information regarding setting of the JT BFRP signal. The information of the setting may be determined based on the information included in JT BFRP Info of the BFRP Trigger signal.

Duration includes information regarding the length of this frame. RA includes information regarding an address of the terminal which is a destination of this frame.

Description of Common TA and Original Info is the same as the description of JT NDPA signal in Fig. 7, and thus description thereof will be omitted.

Common User Info includes an identifier (AP1 STA ID or AP2 STAID) of the terminal STA which is a destination of the plurality of base stations AP. The identifier of the terminal STA may be determined based on the information included in Common User Info of the Initiation signal.

Common User Info includes an identifier (AP1 Sounding ID or AP2 Sounding ID) regarding measurement of channel information performed between the plurality of base stations AP and the terminal STA. The identifier regarding the measurement of the channel information may be determined based on the information included in Common User Info of the Initiation signal.

Common User Info may include information (AP1 Resource or AP2 Resource) regarding frequency resources used when the terminal STA transmits the measurement result of the channel information to each base station AP. The information regarding the frequency resources may be determined based on the information included in Common User Info of the Initiation signal.

Common User Info may be repeated by the number of base stations AP transmitting the JT BFRP signal. When Common User Info is returned, Common User Info corresponding to the base stations AP may be enumerated in a sequence corresponding to a sequence of the identifiers of the base stations AP enumerated in Original Info.

When the frequency resources used for the terminal STA to transmit the measurement result of the channel information to each base station AP are common between the plurality of base stations AP, the number of pieces of information regarding the frequency resources may be one.

FCS includes information regarding error correction.

The JT BFRP signal may be stored and transmitted in Payload of the physical format used by the JT NDPA signal in Fig. 6.

### (Format of BFR signal)

In the sequence in the transmission period of the channel information measurement result request signal, the BFR signal may be transmitted toward a broadcast address or may be transmitted toward Common TA of the JT BFRP signal in Fig. 11. The BFR signal may be transmitted using a Beamforming Report field defined in IEEE 802.11.

### (3) Transmission period of data signal

### (Sequence diagram)

Fig. 12 is a diagram illustrating a sequence when a data signal is transmitted.

In the diagram of the sequence in Fig. 12, the base stations AP1 and AP2 perform sharing and unifying of information by transmitting and receiving the Initiation signal before the sequence. Information for sharing and unifying the Initiation signal is the same as the information described in the diagram of the sequence (S11 and S12) described above in Fig. 3.

The base station AP1 transmits a joint transmission (JT) Trigger signal to the base station AP2 (S31). The joint transmission (JT) Trigger signal can also be called a joint transmission (JT) Slave Trigger signal or a joint transmission (JT) variant of Slave Trigger signal.

The JT Trigger signal is a signal inducing transmission of a joint transmission DATA (JT DATA) signal which is a data signal to the base station AP2 at an identical timing to the base station AP1.The JT DATA signal will be described below.

The JT Trigger signal includes information regarding communication parameters used between the plurality of base stations AP and information regarding the JT DATA signal simultaneously transmitted by the plurality of base stations AP. The base station AP1 may transmit data stored in the JT DATA signal transmitted by the base station AP2 in connection along with the JT Trigger signal.

The base station AP1 transmitting the JT Trigger signal and the base station AP2 receiving the JT Trigger signal transmit the JT DATA signal toward the terminal STA (S32).

The JT DATA signal is generated based on the information subjected to the sharing and the unifying and is transmitted using an identical timing, frequency, or modulation coding method, or other communication parameters based on the information shared and unified or included in a DATA Trigger.

The JT DATA signal includes information regarding an identifier of a transmission source terminal used between the plurality of base stations AP and an identifier of the terminal STA which is a destination of the plurality of base stations AP.

The terminal STA receiving the JT DATA signal receives and decodes the JT DATA signals transmitted from the base stations AP1 and AP2 as a single signal. The terminal STA may receive and decode at least parts (for example, physical headers) of the JT DATA signals as a single signal.

According to the foregoing sequence, the base stations AP1 and AP2 can each transmit the data signal at the identical timing.

The terminal STA can receive the data signals transmitted at the identical timing by the base stations AP1 and AP2 as a single signal.

The plurality of base stations AP can simultaneously transmit the data signal, and thus it is possible to reduce overheads. Due to the reduction in the overheads, it is possible to achieve an improvement in the throughput of the whole system and a reduction in a delay time.

Further, the terminal STA can combine the plurality of signals and obtain a combined gain. Thus, it is possible to expand a communication range. Thus, it is possible to improve communication reliability.

### (Format of JT Trigger signal)

Fig. 13 is a diagram illustrating an example of a frame format used by a JT Trigger signal in the sequence in the transmission period of a data signal.

In Fig. 13, description of Frame Control, Duration, RA, TA, and JT TX Info in the JT Trigger signal is the same as the description of the NDPA Trigger signal in Fig. 5, and thus description thereof will be omitted.

JT DATA Info includes information regarding the JT DATA signal simultaneously transmitted by the plurality of base stations AP.

The information regarding the JT DATA signal may be information regarding setting of the JT DATA signal or may be information regarding setting of Frame Control defined in IEEE 802.11. The information regarding the JT DATA signal may be information for identifying data or information regarding a sequence of data or may be Starting Sequence Number and Sequence Number defined in IEEE 802.11.

FCS includes information regarding error correction.

### (Format of JT DATA signal)

Fig. 14 is a diagram illustrating an example of a frame format used by a JT DATA signal in the sequence in the transmission period of the data signal.

Frame Control includes information regarding setting of the JT DATA signal. The information of the setting may be determined based on the information included in JT DATA Info of the JT Trigger signal.

Duration includes information regarding the length of this frame. RA includes information regarding an address of the terminal which is a destination of this frame.

Description of Common TA and Original Info is the same as the description of JT NDPA signal in Fig. 7, and thus description thereof will be omitted.

DATA includes data destined for the terminal STA. When the base station AP1 transmits the data in connection with the JT Trigger signal, the data may be included.

FCS includes information regarding error correction.

The JT DATA signal may be stored and transmitted in Payload of the physical format used by the JT NDPA signal in Fig. 6.

### (4) Transmission period of data reception result request signal

### (Sequence diagram)

Fig. 15 is a diagram illustrating a sequence when a data reception result request signal is transmitted.

In the diagram of the sequence in Fig. 15, the base stations AP1 and AP2 perform sharing and unifying of information by transmitting and receiving the Initiation signal before the sequence. Information for sharing and unifying the Initiation signal is the same as the information described in the diagram of the sequence (S11 and S12) described above in Fig. 3.

The base station AP1 transmits a block ack request (BAR) Trigger signal to the base station AP2 (S41). The block ack request (BAR) Trigger signal can also be called a block ack request (BAR) Slave Trigger signal or a block ack request (BAR) Trigger variant of Slave Trigger signal.

The BAR Trigger signal is a signal inducing transmission of a joint transmission block ack request (JT BAR) signal which is a data reception result request signal to the base station AP2 at an identical timing to the base station AP1. The JT BAR signal will be described below.

The BAR Trigger signal includes information regarding communication parameters used between the plurality of base stations AP and information regarding the JT BAR signal simultaneously transmitted by the plurality of base stations AP.

The base station AP1 transmitting the BAR Trigger signal and the base station AP2 receiving the BAR Trigger signal transmit the JT BAR signal toward the terminal STA (S42).

The JT BAR signal is generated based on the information subjected to the sharing and the unifying and is transmitted using an identical timing, frequency, or modulation coding method, or other communication parameters based on the information shared and unified or included in a BAR Trigger.

The JT BAR signal includes information regarding an identifier of a transmission source terminal used between the plurality of base stations AP, the identifier of the terminal STA which is a destination of the plurality of base stations AP, and an identifier regarding data for requesting a reception result. The information regarding the identifier of the data may be information regarding a sequence of the data or Starting Sequence Number and Sequence Number defined in IEEE 802.11.

The terminal STA receiving the JT BAR signal receives and decodes the JT BAR signals transmitted from the base stations AP1 and AP2 as a single signal. The terminal STA may receive and decode at least parts (for example, physical headers) of the JT BAR signals as a single signal.

The terminal STA acquires the base stations AP1 and AP2 which are transmission sources and identifiers regarding the data for requesting the reception results from the information included in the JT BAR signal, and transmits the reception results of the designated data (data signals) as a block ack (BA) signal to the base stations AP1 and AP2 (S43).

According to the foregoing sequence, the base stations AP1 and AP2 can each transmit a data reception result request signal at an identical timing.

The terminal STA can receive the data reception result request signals transmitted at the identical timing by the base stations AP1 and AP2 as a single signal. The terminal STA can transmit the data reception result to the base stations AP1 and AP2 while receiving the data reception result request signals as a single signal.

The plurality of base stations AP can simultaneously transmit the data reception result request signal, and thus it is possible to reduce overheads. Due to the reduction in the overheads, it is possible to achieve an improvement in the throughput of the whole system and a reduction in a delay time.

Further, the terminal STA can combine the plurality of signals and obtain a combined gain. Thus, it is possible to expand a communication range. Thus, it is possible to improve communication reliability.

### (Format of BAR Trigger signal)

Fig. 16 is a diagram illustrating an example of a frame format used by a BAR Trigger signal in the sequence in the transmission period of the data reception result request signal.

In Fig. 16, description of Frame Control, Duration, RA, TA, and JT TX Info in the BAR Trigger signal is the same as the description of the NDPA Trigger signal in Fig. 5, and thus description thereof will be omitted.

JT BAR Info includes information regarding the JT BAR signal simultaneously transmitted by the plurality of base stations AP.

The information regarding the JT BAR signal may be information regarding setting of the JT BAR signal or may be information regarding setting of Frame Control defined in IEEE 802.11. The information regarding the JT BAR signal may be information for identifying the data for requesting the reception result or information regarding a sequence of the data or may be Starting Sequence Number and Sequence Number defined in IEEE 802.11.

FCS includes information regarding error correction.

### (Format of JT BAR signal)

Fig. 17 is a diagram illustrating an example of a frame format used by a JT BAR signal in the sequence in the transmission period of the data reception result request signal.

Frame Control includes information regarding setting of the JT BAR signal. The information of the setting may be determined based on the information included in JT BAR Info of the BAR Trigger signal.

Duration includes information regarding the length of this frame. RA includes information regarding an address of the terminal which is a destination of this frame.

Description of Common TA and Original Info is the same as the description of JT NDPA signal in Fig. 7, and thus description thereof will be omitted.

Common User Info includes an identifier (AP1 STA ID or AP2 STAID) of the terminal STA which is a destination of the plurality of base stations AP. The identifier of the terminal STA may be determined based on the information included in Common User Info of the Initiation signal.

Common User Info includes an identifier (AP1 DATA ID or AP2 DATA ID) of data for requesting a reception result or information regarding a sequence of data. The information regarding the sequence of the data may be Starting Sequence Number and Sequence Number defined in IEEE 802.11.

Common User Info may include information (AP1 Resource or AP2 Resource) regarding frequency resources used when the terminal STA transmits the data reception result to each base station AP. The information regarding the frequency resources may be determined based on the information included in Common User Info of the Initiation signal.

Common User Info may be repeated by the number of base stations AP transmitting the JT BAR signal. When Common User Info is returned, Common User Info corresponding to the base stations AP may be enumerated in a sequence corresponding to a sequence of the identifiers of the base stations AP enumerated in Original Info.

When the data used for the terminal STA to transmit the reception result to each base station AP or frequency resources used for the terminal STA to transmit the data reception result to each base station AP are common between the plurality of base stations AP, the number of pieces of information regarding the identifier of the data or the frequency resources may be one.

FCS includes information regarding error correction.

The JT BAR signal may be stored and transmitted in Payload of the physical format used by the JT NDPA signal in Fig. 6.

### (Format of BA signal)

In the sequence in the transmission period of the data reception result request signal, the BA signal may be transmitted toward a broadcast address or may be transmitted toward Common TA of the JT BAR signal in Fig. 17. The BA signal may be transmitted using a block ack frame format defined in IEEE 802.11.

### (Configuration other than Original Info)

In four cases of the above-described (1) the transmission period of the channel information measurement signal, (2) the transmission period of the channel information measurement result request signal, (3) the transmission period of the data signal, and (4) the transmission period of the data reception result request signal, each format used by the JT NDPA signal, the JT BFRP signal, the JT DATA signal, and the JT BAR signal simultaneously transmitted by the base stations AP1 and AP2 may not include Original Info and may be linked to an independent signal storing Original Info.

Fig. 18 is a diagram illustrating an example of a frame format used by an independent signal storing Original Info.

Frame Control includes information regarding setting of the independent signal. Duration includes information regarding the length of this frame. RA includes information regarding an address of a terminal which is a destination of this frame.

Original Info includes information regarding each base station AP before the unifying as in the JT NDPA signal in Fig. 7.

For example, the information regarding each base station AP before the unifying may be an identifier (AP1 ID or AP2 ID) of each base station AP. The information regarding each base station AP before the unifying may be an identifier (AP1 network ID or AP2 network ID) of a network configured by the base stations AP.

FCS includes information regarding error correction.

### (Base station AP starting transmission)

In the above-described sequence diagram, the case in which the base station AP starting the transmission is the base station AP1 among the plurality of base stations AP has been described.

Here, in four cases of (1) the transmission period of the channel information measurement signal, (2) the transmission period of the channel information measurement result request signal, (3) the transmission period of the data signal, and (4) the transmission period of the data reception result request signal, the base station AP starting a sequence or transmission of the Initiation signal can be determined, for example, under the following conditions.

That is, the base station AP may be any of the base station AP that detects the most other base stations AP, the base station AP that is at the center among the nearby base stations AP, the base station AP that has the most corresponding wireless communication functions among the nearby base stations AP, the base station AP that has the highest signal processing capability among the nearby base stations AP, the base station AP determined to be able to improve a throughput by performing simultaneous transmission to the other base stations AP, the base station AP determined to be able to reduce a delay time by performing simultaneous transmission to the other base stations AP, the base station AP determined to be able to expand a communication range by performing simultaneous transmission to the other base stations AP, and the base station AP that is set by a user after the foregoing is applied.

Next, flows of communication processing performed between the terminal STA and the base station AP serving as the communication device 10 included in the wireless communication system will be described with reference to the flowcharts of Figs. 19 to 23.

Here, the communication processing performed by the base station AP or the terminal STA may be performed by at least one control unit between the control unit 101 and the wireless control unit 111. In the following description, control of the control unit 101 will be exemplified.

### (Operation of base station AP1)

Next, a flow of an operation based on control of the control unit 101 of the base station AP1 will be described with reference to the flowcharts of Figs. 19 and 20.

In step S101, the control unit 101 determines whether to perform measurement of channel information.

When it is determined in the determination processing of step S101 that the measurement of the channel information is performed, the processing proceeds to step S102. In steps S102 to S108, processing related to the transmission period of the channel information measurement signal is performed.

In step S102, the control unit 101 transmits the Initiation signal to the base station AP2 by controlling the communication unit 102.

The Initiation signal includes the identifier of the transmission source terminal, the identifier of the network, the communication parameters used by the base station AP, the identifier of the data, the identifier of the terminal STA, the identifier of the measurement of the channel information, and the communication parameters used by the terminal STA. The details of the format of the Initiation signal have been described in Fig. 4.

In step S103, the control unit 101 receives the Initiation signal transmitted from the base station AP2 by controlling the communication unit 102.

In step S104, the control unit 101 determines the information to be shared and unified with the base station AP2 based on the transmitted and received Initiation signal.

In step S105, the control unit 101 transmits the NDPA Trigger signal to the base station AP2 by controlling the communication unit 102.

In step S106, the control unit 101 transmits the JT NDPA signal to the terminal STA at the identical timing to the base station AP2 by controlling the communication unit 102.

In step S107, the control unit 101 transmits the NDP Trigger signal to the base station AP2 by controlling the communication unit 102.

In step S108, the control unit 101 transmits the JT NDP signal to the terminal STA at the identical timing to the base station AP2 by controlling the communication unit 102.

When the processing related to the transmission period of the channel information measurement signal ends, the processing proceeds to step S109. In steps S109 to S111, processing related to the transmission period of the channel information measurement result request signal is performed.

In step S109, the control unit 101 transmits the BFRP Trigger signal to the base station AP2 by controlling the communication unit 102.

In step S110, the control unit 101 transmits the JT BFRP signal to the terminal STA at the identical timing to the base station AP2 by controlling the communication unit 102.

In step S111, the control unit 101 receives the BFR signal transmitted from the terminal STA by controlling the communication unit 102.

When the processing related to the transmission period of the channel information measurement result request signal ends, the processing proceeds to step S115 of Fig. 20.

When it is determined in the determination processing of step S101 that the measurement of the channel information is not performed, the processing proceeds to step S112 of Fig. 20 and processing of steps S112 to 114 is performed.

In step S112, the control unit 101 transmits the Initiation signal to the base station AP2 by controlling the communication unit 102.

The Initiation signal includes the identifier of the transmission source terminal, the identifier of the network, the communication parameters used by the base station AP, the identifier of the data, the identifier of the terminal STA, and the communication parameters used by the terminal STA. The details of the format of the Initiation signal have been described in Fig. 4.

In step S113, the control unit 101 receives the Initiation signal transmitted from the base station AP2 by controlling the communication unit 102.

In step S114, the control unit 101 determines the information to be shared and unified with the base station AP2 based on the transmitted and received Initiation signal.

When the processing of step S114 ends, the processing proceeds to step S115. That is, when the measurement of the channel information is not performed and the data signal is transmitted, the Initiation signal is exchanged in advance and the information to be shared and unified is determined in the base stations AP1 and AP2.

When the processing of steps S111 or S114 ends, the processing proceeds to step S115. In steps S115 and S116, processing related to the transmission period of the data signal is performed.

In step S115, the control unit 101 transmits the JT Trigger signal to the base station AP2 by controlling the communication unit 102.

In step S116, the control unit 101 transmits the JT DATA signal to the terminal STA at the identical timing to the base station AP2 by controlling the communication unit 102.

When the processing related to the transmission period of the data signal ends, the processing proceeds to step S117. In steps S117 to S119, processing related to the transmission period of the data reception result request signal is performed.

In step S117, the control unit 101 transmits the BAR Trigger signal to the base station AP2 by controlling the communication unit 102.

In step S118, the control unit 101 transmits the JT BAR signal at the identical timing to the base station AP2 to the terminal STA by controlling the communication unit 102.

In step S119, the control unit 101 receives the BA signal transmitted from the terminal STA by controlling the communication unit 102.

When the processing related to the transmission period of the data reception result request signal ends, the processing ends.

The operation of the base station AP1 has been described above.

### (Operation of base station AP2)

Next, a flow of an operation based on control of the control unit 101 of the base station AP2 will be described with reference to the flowcharts of Figs. 21 and 22.

In step S131, the control unit 101 receives the Initiation signal transmitted from the base station AP1 by controlling the communication unit 102.

In step S132, the control unit 101 determines whether to agree with the unifying designated with the received Initiation signal.

When it is determined in the determination processing of step S132 that the unifying is agreed with, the processing proceeds to step S133.

In step S133, the control unit 101 transmits the Initiation signal including the agreement information (Agreement) to the base station AP1 by controlling the communication unit 102.

Conversely, when it is determined in the determination processing of step S132 that the unifying is not agreed with, the processing proceeds to step S134.

In step S134, the control unit 101 transmits the Initiation signal including disagreed information to the base station AP1 by controlling the communication unit 102.

When the processing of steps S133 or S134 ends, the processing proceeds to step S135.

In step S135, the control unit 101 determines the information to be shared and unified with the base station AP1 based on the transmitted and received Initiation signal.

In step S136, the control unit 101 determines whether the NDPA Trigger signal transmitted from the base station AP1 is received.

When it is determined in the determination processing of step S136 that the NDPA Trigger signal is received, the processing proceeds to step S137. In steps S136 to S139, processing related to the transmission period of the channel information measurement signal is performed.

In step S137, the control unit 101 transmits the JT NDPA signal to the terminal STA at the identical timing to the base station AP1 by controlling the communication unit 102.

In step S138, the control unit 101 receives the NDP Trigger signal transmitted from the base station AP1 by controlling the communication unit 102.

In step S139, the control unit 101 transmits the JT NDP signal to the terminal STA at the identical timing to the base station AP1 by controlling the communication unit 102.

When the processing related to the transmission period of the channel information measurement signal ends, the processing proceeds to step S140. In steps S140 to S142, processing related to the transmission period of the channel information measurement result request signal is performed.

In step S140, the control unit 101 receives the BFRP Trigger signal transmitted from the base station AP1 by controlling the communication unit 102.

In step S141, the control unit 101 transmits the JT BFRP signal at the identical timing to the base station AP1 to the terminal STA by controlling the communication unit 102.

In step S142, the control unit 101 receives the BFR signal transmitted from the terminal STA by controlling the communication unit 102.

When the processing related to the transmission period of the channel information measurement result request signal ends, the processing proceeds to step S143 of Fig. 22. When it is determined in the determination processing of step S136 that the NDPA Trigger signal is not received, the processing also proceeds to step S143 of Fig. 22.

In steps S143 to S144, processing related to the transmission period of the data signal is performed.

In step S143, the control unit 101 determines whether the JT Trigger signal transmitted from the base station AP1 is received.

When it is determined in the determination processing of step S143 that the JT Trigger signal is received, the processing proceeds to step S144.

In step S144, the control unit 101 transmits the JT DATA signal to the terminal STA at the identical timing to the base station AP1 by controlling the communication unit 102.

When the processing related to the transmission period of the data signal, the processing proceeds to step S145. In steps S145 to S147, processing related to the transmission period of the data reception result request signal is performed.

In step S145, the control unit 101 receives the BAR Trigger signal transmitted from the base station AP1 by controlling the communication unit 102.

In step S146, the control unit 101 transmits the JT BAR signal to the terminal STA at the identical timing to the base station AP1 by controlling the communication unit 102.

In step S147, the control unit 101 receives the BA signal transmitted from the terminal STA by controlling the communication unit 102.

When the processing related to the transmission period of the data reception result request signal ends or it is determined in the determination processing of step S143 that the JT Trigger signal is not received, the processing ends.

The operation of the base station AP2 has been described above.

### (Operation of terminal STA)

Next, a flow of an operation based on control of the control unit 101 of the terminal STA will be described with reference to the flowchart of Fig. 23.

In step S161, the control unit 101 receives the Initiation signals transmitted from the base stations AP1 and AP2 by controlling the communication unit 102. The terminal STA may not be notified of the Initiation signals.

In step S162, the control unit 101 determines whether the JT NDPA signals transmitted from the base stations AP1 and AP2 are received.

When it is determined in the determination processing of step S162 that the JT NDPA signals are received, the processing proceeds to step S163. In steps S162 to S165, processing related to the transmission period of the channel information measurement signal is performed.

In step S163, the control unit 101 performs control such that transmission is inhibited during a period designated with the JT NDPA signal.

In step S164, the control unit 101 receives the JT NDP signals from the base stations AP1 and AP2 by controlling the communication unit 102.

In step S165, the control unit 101 measures the channel information based on the received JT NDP signals.

When the processing related to the transmission period of the channel information measurement signal ends, the processing proceeds to step S166. In steps S166 and S167, processing related to the transmission period of the channel information measurement result request signal is performed.

In step S166, the control unit 101 receives the JT BFRP signals transmitted from the base stations AP1 and AP2 by controlling the communication unit 102.

In step S167, the control unit 101 transmits the BFR signal to the base stations AP1 and AP2 by controlling the communication unit 102.

When the processing related to the transmission period of the channel information measurement result request signal ends or it is determined in the determination processing of step S162 that the JT NDPA signals are not received, the processing proceeds to step S168. In step S168, processing related to the transmission period of the data signal is performed.

In step S168, the control unit 101 determines whether the JT DATA signals transmitted from the base stations AP1 and AP2 are received.

When it is determined in the determination processing of step S168 that the JT DATA signals are received, the processing proceeds to step S169. In steps S169 and S170, processing related to the transmission period of the data reception result request signal is performed.

In step S169, the control unit 101 receives the JT BAR signals transmitted from the base stations AP1 and AP2 by controlling the communication unit 102.

In step S170, the control unit 101 transmits the BA signal to the base stations AP1 and AP2 by controlling the communication unit 102.

When the processing related to the transmission period of the data reception result request signal ends or it is determined in the determination processing of step S168 that the JT DATA signals are not received, the processing ends.

The operation of the terminal STA has been described above.

### (Constraint configuration)

In the above description, the wireless communication system that has the non-constraint configuration (see A of Fig. 1) to which the present technology is applied has been described, but the wireless communication system may have the constraint configuration (see B of Fig. 1).

Hereinafter, sequence diagrams in (1) the transmission period of the channel information measurement signal, (2) the transmission period of the channel information measurement result request signal, (3) the transmission period of the data signal, and (4) the transmission period of the data reception result request signal when the wireless communication system to which the present technology is applied has the constraint configuration will be described.

In the sequence diagrams, operations of the terminal STA connected to at least one base station AP between the plurality of base stations AP1 and AP2 and the base station AP3 to which the plurality of base stations AP1 and AP2 are connected will be described.

### (Transmission period of channel information measurement signal)

Fig. 24 is a diagram illustrating a sequence when a channel information measurement signal in a constraint configuration is transmitted.

The base station AP3 transmits the Initiation signal to the base station AP1 (S51). The base station AP1 transmits the Initiation signal to the base station AP3 as a response to the transmission (S52).

Similarly, the base stations AP3 and AP2 transmit and receive the Initiation signal (S53 and S54).

The Initiation signal includes common information used by the plurality of base stations AP and information regarding a terminal which is a destination of the plurality of base stations AP.

By transmitting and receiving the Initiation signal, the base stations AP1, AP2, and AP3 perform sharing and unifying of information. The base stations AP1, AP2, and AP3 and the terminal STA may check whether to corresponding to the sequence before the sequence starts or by transmitting and receiving the Initiation signal.

A frame format used by the Initiation signal may be the same as the frame format (see Fig. 4) in the non-constraint configuration or may be a frame format which does not include My Info.

By transmitting and receiving the Initiation signal, the base station AP3 performing the sharing and unifying of the information transmits the NDPA Trigger signal to the base stations AP1 and AP2 (S55). A frame format used by the NDPA Trigger signal is the same as the frame format (see Fig. 5) in the non-constraint configuration.

The base stations AP1 and AP2 receiving the NDPA Trigger signal transmit the JT NDPA signals toward the terminal STA (S56). A frame format used by the JT NDPA signal is the same as the frame format (see Fig. 7) in the non-constraint configuration.

The terminal STA receiving the JT NDPA signal receives and decodes the JT NDPA signals transmitted from the base stations AP1 and AP2 as a single signal. The terminal STA may receive and decode at least parts (for example, physical headers) of the JT NDPA signals as a single signal.

After the base stations AP1 and AP2 transmit the JT NDPA signals, the base station AP3 transmit the NDP Trigger signals to the base stations AP1 and AP2 (S57). A frame format used by the NDP Trigger signal is the same as the frame format (see Fig. 8) in the non-constraint configuration.

The base stations AP1 and AP2 receiving the NDP Trigger signal transmit the JT NDP signals (S58). A frame format used by the JT NDP signal is the same as the frame format in the non-constraint configuration.

The terminal STA receiving the JT NDP signal receives and decodes the JT NDP signals transmitted from the base stations AP1 and AP2 as a single signal. The terminal STA may receive and decode at least parts (for example, physical headers) of the JT NDP signals as a single signal.

According to the foregoing sequence, the information can be shared and unified between the base stations AP1, AP2, and AP3. The identical signal can be generated and transmitted between the base stations AP1 and AP2.

The base stations AP1 and AP2 can each transmit a report signal for reporting transmission of a measurement signal at the identical timing. The terminal STA can receive the report signals transmitted at the identical timing by the base stations AP1 and AP2 as a single signal.

Further, the base stations AP1 and AP2 can each transmit the measurement signal at the identical timing. The terminal STA can receive the measurement signals transmitted at the identical timing by the base stations AP1 and AP2 as a single signal.

The plurality of base stations AP can transmit the signal for simultaneously measuring the channel information, and thus it is possible to reduce overheads. Due to the reduction in the overheads, it is possible to achieve an improvement in the throughput of the whole system and a reduction in a delay time.

Further, the terminal STA can combine the plurality of signals and obtain a combined gain. Thus, it is possible to expand a communication range. Thus, it is possible to improve communication reliability.

### (Transmission period of channel information measurement result request signal)

Fig. 25 is a diagram illustrating a sequence in a transmission period of a channel information measurement result request signal in the constraint configuration.

In the sequence diagram of Fig. 25, the base stations AP1, AP2, and AP3 perform sharing and unifying of information by transmitting and receiving the Initiation signal before the sequence. The Initiation signal and the information to be shared and unified are the same as those described in the above-described sequence diagram (S51 to S54) of Fig. 24.

The base station AP3 transmits the BFRP Trigger signal to the base stations AP1 and AP2 (S61). A frame format used by the BFRP Trigger signal is the same as the frame format (see Fig. 10) in the non-constraint configuration.

The base stations AP1 and AP2 receiving the BFRP Trigger signal transmit the JT BFRP signals toward the terminal STA (S62). A frame format used by the JT BFRP signal is the same as the frame format (see Fig. 11) in the non-constraint configuration.

The terminal STA receiving the JT BFRP signal receives and decodes the JT BFRP signals transmitted from the base stations AP1 and AP2 as a single signal. The terminal STA may receive and decode at least parts (for example, physical headers) of the JT BFRP signals as a single signal.

The terminal STA acquires the base stations AP1 and AP2 which are transmission sources and an identifier related to measurement of the channel information of the base stations AP1 and AP2 from the information included in the JT BFRP signal, and transmits a measurement result of the designated channel information as the BFR signal to the base stations AP1 and AP2 (S63).

According to the foregoing sequence, the base stations AP1 and AP2 can each transmit measurement result request signals at the identical timing.

The terminal STA can receive the measurement result request signals transmitted at the identical timing by the base stations AP1 and AP2 as a single signal. The terminal STA can transmit the measurement result to the base stations AP1 and AP2 while receiving the measurement result request signals as a single signal.

The plurality of base stations AP can simultaneously transmit the measurement result request signals, and thus it is possible to reduce overheads. Due to the reduction in the overheads, it is possible to achieve an improvement in the throughput of the whole system and a reduction in a delay time.

Further, the terminal STA can combine the plurality of signals and obtain a combined gain. Thus, it is possible to expand a communication range. Thus, it is possible to improve communication reliability.

### (Transmission period of data signal)

Fig. 26 is a diagram illustrating a sequence in a transmission period of a data signal in the constraint configuration.

In the sequence diagram of Fig. 26, the base stations AP1, AP2, and AP3 perform sharing and unifying of information by transmitting and receiving the Initiation signal before the sequence. The Initiation signal and the information to be shared and unified are the same as those described in the above-described sequence diagram (S51 to S54) of Fig. 24.

The base station AP3 transmits the JT Trigger signal to the base stations AP1 and AP2 (S71). A frame format used by the JT Trigger signal is the same as the frame format (see Fig. 13) in the non-constraint configuration.

The base stations AP1 and AP2 receiving the JT Trigger signal transmit the JT DATA signals toward the terminal STA (S72). A frame format used by the JT DATA signal is the same as the frame format (see Fig. 14) in the non-constraint configuration.

The terminal STA receiving the JT DATA signal receives and decodes the JT DATA signals transmitted from the base stations AP1 and AP2 as a single signal. The terminal STA may receive and decode at least parts (for example, physical headers) of the JT DATA signals as a single signal.

According to the foregoing sequence, the base stations AP1 and AP2 can each transmit data signals at the identical timing.

The terminal STA can receive the data signals transmitted at the identical timing by the base stations AP1 and AP2 as a single signal.

The plurality of base stations AP can simultaneously transmit the data signal, and thus it is possible to reduce overheads. Due to the reduction in the overheads, it is possible to achieve an improvement in the throughput of the whole system and a reduction in a delay time.

Further, the terminal STA can combine the plurality of signals and obtain a combined gain. Thus, it is possible to expand a communication range. Thus, it is possible to improve communication reliability.

### (Transmission period of data reception result request signal)

Fig. 27 is a diagram illustrating a sequence when a data reception result request signal in the constraint configuration is transmitted.

In the sequence diagram of Fig. 27, the base stations AP1, AP2, and AP3 perform sharing and unifying of information by transmitting and receiving the Initiation signal before the sequence. The Initiation signal and the information to be shared and unified are the same as those described in the above-described sequence diagram (S51 to S54) of Fig. 24.

The base station AP3 transmits the BAR Trigger signal to the base stations AP1 and AP2 (S81). A frame format used by the BAR Trigger signal is the same as the frame format (see Fig. 16) in the non-constraint configuration.

The base stations AP1 and AP2 receiving the BAR Trigger signal transmit the JT BAR signals toward the terminal STA (S82). A frame format used by the JT BAR signal is the same as the frame format (see Fig. 17) in the non-constraint configuration.

The terminal STA receiving the JT BAR signal receives and decodes the JT BAR signals transmitted from the base stations AP1 and AP2 as a single signal. The terminal STA may receive and decode at least parts (for example, physical headers) of the JT BAR signals as a single signal.

The terminal STA acquires the base stations AP1 and AP2 which are transmission sources and an identifier of data for requesting a reception result from the information included in the JT BAR signal, and transmits the reception result of the designated data (a data signal) as the BA signal to the base stations AP1 and AP2 (S83).

According to the foregoing sequence, the base stations AP1 and AP2 can each transmit data reception result request signals at the identical timing.

The terminal STA can receive the data reception result request signals transmitted at the identical timing by the base stations AP1 and AP2 as a single signal. The terminal STA can transmit the data reception result to the base stations AP1 and AP2 while receiving the data reception result request signals as a single signal.

The plurality of base stations AP can simultaneously transmit the data reception result request signals, and thus it is possible to reduce overheads. Due to the reduction in the overheads, it is possible to achieve an improvement in the throughput of the whole system and a reduction in a delay time.

Further, the terminal STA can combine the plurality of signals and obtain a combined gain. Thus, it is possible to expand a communication range. Thus, it is possible to improve communication reliability.

As described above, the communication device 10 (the base station AP) controls the sequences for sharing information (for example, sharing information to be stored in the identical signal) and unifying information (for example, using addresses determined in advance or one address) by exchanging the signal related to the setting of the identical signal (the Initiation signal or the Trigger signal) in the cases (the measurement of the channel information, the transmission of the data signal, and the like) in which the identical signal (the JT NDPA signal, the JT NDP signal, the JT BFRP signal, the JT DATA signal, and the JT BAR signal) are generated and transmitted between the first other communication devices 10 (the other base stations AP).

In the communication device 10 (the base station AP), an operation of each unit is controlled such that the identical signal (the JT NDPA signal, the JT NDP signal, the JT BFRP signal, the JT DATA signal, and the JT BAR signal) is transmitted to the second other communication device 10 (the terminal STA) using the signal format for storing the shared and unified information based on the exchanged signal (the Initiation signal or the like).

Thus, in the case in which the AP cooperation technology is used, the identical signal can be transmitted more appropriately between the plurality of communication devices 10 (the base stations AP) when the identical signal is transmitted to the single communication device 10 (the terminal STA).

That is, in the related art, in the case in which the AP cooperation technology is used, since the information specific to each base station is included in parts of the signals transmitted by the plurality of base stations AP and the finally generated signal differs for each base station AP, a technology for generating and transmitting the identical signal to the single terminal STA while including the information specific to each base station is requested between the plurality of base stations AP. The present technology can satisfy the request.

Thus, the single communication device 10 (the terminal STA) can combine the plurality of identical signals and obtain a combined gain. Thus, the plurality of communication devices 10 (the base stations AP) can operate in cooperation and reduce communication interference. Thus, it is possible to achieve an improvement in the throughput of the whole system and a reduction in a delay time. Thus, it is possible to expand a communication range.

In the scheme disclosed in PTL 1 described above, a method of generating the identical signals is not disclosed. When an AP cooperation technology is used, it is difficult to implement a form for obtaining diversity.

In LTE-Advance designed as the 4th generation (4G) mobile communication system, coordinated multi-point (CoMP) is defined and a joint transmission scheme of transmitting an identical signal from a plurality of base stations is defined. In LTE-Advance, however, information specific to a transmission base station is sent with a control channel. Accordingly, CoMP of LTE-Advance cannot be applied as a communication scheme in which there is no control channel.

### <2. Modified examples>

### (Examples of other configurations)

As described above, in the communication device 10 (see Fig. 2), the control unit 101 (see Fig. 2) performs the processing related to (1) the transmission period of the channel information measurement signal, (2) the transmission period of the channel information measurement result request signal, (3) the transmission period of a data signal, and (4) the transmission period of a data reception result request signal. However, the communication unit 102 (the wireless control unit 111 of the communication unit 102) configured as a communication module (a communication device) may have such functions.

The configuration of the above-described communication device 10 in Fig. 2 is exemplary, and a new constituent element may be added or a constituent element may be omitted.

For example, in the communication device 10 in Fig. 2, the data processing unit 112 provided outside of (not inside but outside of) the communication unit 102 may exchange data with the modulation and demodulation unit 113 under the control of the control unit 101. Alternatively, the wireless control unit 111 may not be provided in the communication unit 102 and the communication unit 102 may perform wireless communication under the control of the control unit 101. On the other hand, the control unit 101 provided in (not outside of but inside) the communication unit 102 may control wireless communication instead of the wireless control unit 111. For example, the communication device 10 may include another communication unit communicating with another base station AP as a constituent element in addition to the communication unit 102.

The terminal STA serving as the communication device 10 can be configured as, for example, an electronic device (wireless device) that has a wireless communication function of a smartphone, a tablet terminal, a digital camera, a portable music player, a game device, a television receiver, a wearable terminal, a speaker device, a mobile phone, a personal computer, or the like.

The communication device 10 may be configured as a part (for example, a communication module, a communication chip, or the like) of a device configured as the base station AP or the terminal STA. That is, the communication device 10 is not limited to an electronic device and includes a communication module, a chip, or the like (in this case, the communication device 10 does not include the antenna 118).

In the foregoing description, the "identical signal" includes a completely identical signal, of course. For example, when a waveform of a radio wave to be transmitted is viewed in a time direction, a signal waveform that has an identical frequency and phase and a different amplitude may be included in the identical signal.

In the above-described embodiments, the "system" means a set of a plurality of constituent elements (devices or the like). Further, in the present specification, the "measurement" may be replaced with "observation." Different names may be used as the names of the above-described signals. Although the names of the signals are changed, substantial content (formats or the like) of the signals are not changed by changing the names of the signals formally.

Embodiments of the present technology are not limited to the above-described embodiments and can be modified in various forms within the scope of the present technology without departing from the gist of the present technology.

The present technology can be configured as follows.
(1) A communication device including:
   a control unit configured to perform control such that
   a first signal related to setting of identical signals is transmitted and received between first other communication devices, and
   the identical signals are transmitted to a second other communication device based on the first signal.
(2) The communication device according to (1), wherein the first signal includes a signal for sharing and unifying information between the first other communication devices.
(3) The communication device according to (2), wherein the control unit unifying a transmission method and signals to be transmitted based on the first signal.
(4) The communication device according to (3), wherein, when the unifying is agreed in accordance with the first signal transmitted from the first other communication device, the control unit transmits the first signal including information indicating the agreement to the first other communication devices.
(5) The communication device according to any one of (1) to (4), wherein the first signal includes a second signal for transmitting the identical signals at an identical timing.
(6) The communication device according to (5), wherein the control unit
   transmits or receives the second signal, and
   transmits the identical signals at the identical timing to the first other communication devices based on the second signal.
(7) The communication device according to any one of (1) to (6), wherein the identical signals include information to be shared and unified.
(8) The communication device according to any one of (1) to (6), wherein the second signal includes a signal inducing transmission of a report signal for reporting transmission of a measurement signal for measuring channel information.
(9) The communication device according to any one of (1) to (6), wherein the second signal includes a signal inducing a measurement signal for measuring channel information.
(10) The communication device according to any one of (1) to (6), wherein the second signal includes a signal inducing transmission of a measurement result of channel information.
(11) The communication device according to any one of (1) to (6), wherein the second signal includes a signal inducing transmission of a data signal.
(12) The communication device according to any one of (1) to (6), wherein the second signal includes a signal inducing transmission of a reception result of a data signal.
(13) The communication device according to (5), wherein the control unit transmits the second signal in connection with a data signal transmitted at an identical timing.
(14) A communication method for a communication device performing control such that
   a first signal related to setting of identical signals is transmitted and received between first other communication devices, and
   the identical signals are transmitted to a second other communication device based on the first signal.
(15) A communication device comprising:
   a control unit configured to perform control such that
   a plurality of identical signals related to setting of the identical signals and
   transmitted from a plurality of other communication devices exchanging a first signal are received, and
   the plurality of identical signals are decoded as a single signal.
(16) The communication device according to (15), wherein the control unit identifies the plurality of other communication devices based on information included in the single signal.
(17) The communication device according to (15) or (16), wherein the control unit identifies a frequency resource used to transmit a third signal to the plurality of other communication devices based on the information included in the single signal.
(18) The communication device according to (17), wherein the third signal includes a measurement result of the channel information.
(19) The communication device according to (17), wherein the third signal includes a reception result of a data signal.
(20) A communication method for a communication device performing control such that
   a plurality of identical signals related to setting of the identical signals and transmitted from a plurality of other communication devices exchanging a first signal are received, and
   the plurality of identical signals are decoded as a single signal.

### [Reference Signs List]

10 Communication device
101 Control unit
102 Communication unit
103 Power unit
111 Wireless control unit
112 Data processing unit
113 Modulation and demodulation unit
114 Signal processing unit
115 Channel estimation unit
116, 116-1 to 116-N Wireless interface units
117, 117-1 to 117-N Amplification units
118, 118-1 to 118-N Antennas
AP Base station
STA Terminal

## Claims

1. A communication device comprising:
a control unit configured to perform control such that
a first signal related to setting of identical signals is transmitted and received between first other communication devices, and
the identical signals are transmitted to a second other communication device based on the first signal.

2. The communication device according to claim 1, wherein the first signal includes a signal for sharing and unifying information between the first other communication devices.

3. The communication device according to claim 2, wherein the control unit unifying a transmission method and signals to be transmitted based on the first signal.

4. The communication device according to claim 3, wherein, when the unifying is agreed in accordance with the first signal transmitted from the first other communication device, the control unit transmits the first signal including information indicating the agreement to the first other communication devices.

5. The communication device according to claim 1, wherein the first signal includes a second signal for transmitting the identical signals at an identical timing.

6. The communication device according to claim 5, wherein the control unit
transmits or receives the second signal, and
transmits the identical signals at the identical timing to the first other communication devices based on the second signal.

7. The communication device according to claim 5, wherein the second signal includes information to be shared and unified.

8. The communication device according to claim 5, wherein the second signal includes a signal inducing transmission of a report signal for reporting transmission of a measurement signal for measuring channel information.

9. The communication device according to claim 5, wherein the second signal includes a signal inducing a measurement signal for measuring channel information.

10. The communication device according to claim 5, wherein the second signal includes a signal inducing transmission of a measurement result of channel information.

11. The communication device according to claim 5, wherein the second signal includes a signal inducing transmission of a data signal.

12. The communication device according to claim 5, wherein the second signal includes a signal inducing transmission of a reception result of a data signal.

13. The communication device according to claim 5, wherein the control unit transmits the second signal in connection with a data signal transmitted at an identical timing.

14. A communication method for a communication device performing control such that
a first signal related to setting of identical signals is transmitted and received between first other communication devices, and
the identical signals are transmitted to a second other communication device based on the first signal.

15. A communication device comprising:
a control unit configured to perform control such that
a plurality of identical signals related to setting of the identical signals and transmitted from a plurality of other communication devices exchanging a first signal are received, and
the plurality of identical signals are decoded as a single signal.

16. The communication device according to claim 15, wherein the control unit identifies the plurality of other communication devices based on information included in the single signal.

17. The communication device according to claim 15, wherein the control unit identifies a frequency resource used to transmit a third signal to the plurality of other communication devices based on the information included in the single signal.

18. The communication device according to claim 17, wherein the third signal includes a measurement result of the channel information.

19. The communication device according to claim 17, wherein the third signal includes a reception result of a data signal.

20. A communication method for a communication device performing control such that
a plurality of identical signals related to setting of the identical signals and transmitted from a plurality of other communication devices exchanging a first signal are received, and
the plurality of identical signals are decoded as a single signal.
